# EUROPÄISCHE PATENTSCHRIFT

(11) **EP 2 944 549 B1**
(45) Veröffentlichungstag und Bekanntmachung des Hinweises auf die Patenterteilung: **02.05.2018**
(21) Anmeldenummer: 15167515.4
(22) Anmeldetag: 13.05.2015
(51) Int. Cl.: B62D 53/00, B62D 13/00

(54) **GLEISLOSER ROUTENZUG UND VERFAHREN ZUR LENKUNG EINES GLEISLOSEN ROUTENZUGES**
TRACKLESS ROUTE TRAIN AND METHOD FOR STEERING A TRACKLESS ROUTE TRAIN
CONVOI TRACTÉ SANS RAIL ET PROCÉDÉ DE DIRECTION D'UN CONVOI TRACTÉ SANS RAIL

(30) Priorität: 16.05.2014 DE 102014106928; 13.10.2014 DE 202014104858 U
(43) Veröffentlichungstag der Anmeldung: 18.11.2015
(73) Patentinhaber: Helmut-Schmidt-Universität, 22043 Hamburg (DE); Hamburg Innovation GmbH, 21079 Hamburg (DE)
(72) Erfinder: Bruns, Rainer, 22395 Hamburg (DE); Ulrich, Stephan, 22147 Hamburg (DE); Krivenkov, Konstantin, 21033 Hamburg (DE)
(74) Vertreter: RGTH

(56) Entgegenhaltungen:
- EP-A2- 1 847 443
- EP-A2- 2 192 024

## Beschreibung

Die vorliegende Erfindung betrifft einen gleislosen Routenzug. Ferner betrifft die Erfindung ein Verfahren zur Lenkung eines gleislosen Routenzuges.

### Stand der Technik

Gleislose Routenzüge können insbesondere als Flurförderzeuge für einen beispielsweise innerbetrieblichen Transport eingesetzt werden. Ein Routenzug weist üblicherweise mindestens ein Transportmodul, vorzugsweise zwei oder mehr hintereinander angeordnete Transportmodule, auf, welche derart ausgebildet sein können, dass sie Lasten bzw. Güter insbesondere horizontal transportieren können. Der Routenzug weist ferner meist ein Schleppfahrzeug auf, welches in Fahrtrichtung gesehen vor das erste Transportmodul gespannt ist, um die Transportmodule zu ziehen und damit in eine gewünschte Richtung zu bewegen. Ein wichtiges Ziel bei der Gestaltung eines Routenzuges ist es, dass die Transportmodule dem Schleppfahrzeug möglichst spurtreu folgen. Geringe oder wenn möglich gar keine Spurabweichungen der Transportmodule ermöglichen schmale Fahrwege des Routenzuges, so dass der Routenzug auch auf kleinen Verkehrsflächen sicher bewegt werden kann. Außerdem kann durch die Spurtreue die Gefahr von Anfahrunfällen reduziert werden, da Transportmodule, welche sich nicht in der Spur des Schleppfahrzeuges bewegen, in Kurven mit Personen oder Gegenständen, die sich am Rand des Fahrweges befinden, schnell zusammenstoßen können.

Aus dem Stand der Technik sind verschiedene Ausgestaltungen für die Fahrwerke der Transportmodule bekannt. Beispielsweise können die Transportmodule zwei Haupträder aufweisen, die an einer Radachse nicht schwenkbar angeordnet sind. Zusätzlich zu den Haupträdern können weitere Stützrollen, die als Nachlaufrollen ausgeführt sind, zur sicheren Abstützung des Transportmoduls vorzugsweise an den Ecken des Transportmoduls angeordnet sein. Diese Stützrollen können sich selbsttätig ausrichten und beeinflussen daher üblicherweise das Nachlaufverhalten und die Spurabweichung nicht wesentlich. Das Fahrwerk dieser Zweirad- bzw. Einachsentransportmodule ist einfach aufgebaut und daher kostengünstig herstellbar. Da ferner keine Vorrichtung zum Lenken der Räder benötigt wird, weist das Fahrwerk eine geringe Komplexität auf, wodurch es wartungsarm und betriebssicher ist. Nachteilig an diesem unmittelbar an dem Transportmodul angeordneten Fahrwerk ist jedoch, dass sich die Achse mit den beiden Haupträdern in etwa in der Mitte des Transportmoduls befinden muss, um ein gutes Nachlaufverhalten und damit eine hohe Spurtreue des Transportmoduls erreichen zu können. Dadurch werden jedoch die Möglichkeiten, die Transportmodule mit rollbaren Transportgestellen zu beladen, erheblich eingeschränkt. Insbesondere können Transportmodule mit derartigen Fahrwerken nicht beidseitig mit größeren Transportgestellen, deren Grundflächenabmaße in etwa der Breite der Transportmodule entsprechen, ohne weitere technische Hilfsmittel beladen werden.

Um eine beidseitige Be- und Entladung der Transportmodule mit Transportgestellen oder anderen rollbaren Ladungsträgern ermöglichen zu können, sind vierrädrige Transportmodulfahrwerke für einen Routenzug entwickelt worden, bei denen jeweils zwei Räder auf einer Achse angeordnet sind. Diese Räder sind derart gelagert, dass diese mithilfe einer mechanischen oder hydraulischen Lenkvorrichtung um eine Hochachse geschwenkt werden können.

Ein gleisloser Routenzug mit einem derartigen Fahrwerk ist beispielsweise aus der DE 10 2008 060 801 B3 bekannt. Die Lenkwinkel der Räder werden hierbei durch die Lenkvorrichtung in Abhängigkeit vom Winkel zwischen der Anhängerdeichsel und der Anhängerlängsachse verändert. Die einzelnen Lenkvorrichtungen sind dabei beispielsweise über ein Gestänge miteinander gekoppelt, so dass die Lenkwinkel der Vorderräder betragsmäßig den Lenkwinkeln der Hinterräder entsprechen. Nachteilig hierbei ist, dass die Lenkbewegung der Vorderachsräder auf die Hinterräder unter Umkehrung der Richtung übertragen werden muss. Dies ist insbesondere dann schwierig, wenn die Transportmodule beidseitig mit rollbaren Transportgestellen Be- und Entladen werden sollen. Hierfür wird eine Ausführung der Transportmodule verwendet, die als U-Rahmen bezeichnet wird und deren Tragrahmen von der Seite gesehen die Gestalt eines unten offenen Portals hat. Die Pfeiler dieses Portals werden dabei von den beiden Radachsen getragen. Die Übertragung des Lenkeinschlags von der Vorder- zur Hinterachse ist hierbei besonders aufwendig, da die Weiterleitung der Bewegung über größere Strecken erfolgen muss und mehrere Richtungsumlenkungen erfährt. Der technische Realisierungsaufwand für einen derartigen Routenzug ist daher sehr groß, wodurch sowohl die Herstellungskosten als auch der Wartungsaufwand hoch sind.

Die EP 2 192 024 A2 offenbart die Präambel des Anspruch 1 und zeigt einen gleislosen Gliederzug bestehend aus mehreren Gliedern, die untereinander eine gelenkige Verbindung haben und jeweils eine lenkbare Achseneinheit aufweisen, deren Achsmittelpunkt vertikal fluchtend unter der gelenkigen Verbindung liegt, wobei die Lenkungen der Achseinheiten derart miteinander gekoppelt sind, dass jede Achseinheit immer den gleichen Lenkwinkel in entgegengesetzter Richtung wie die jeweilig vordere Achseinheit einschlägt, wobei beide Lenkwinkel auf die Längsachse des Gliedes zwischen beiden Achseinheiten bezogen sind und der Lenkwinkel der vordersten Achseinheit durch die Fahrtrichtung bestimmt ist. Weiterhin werden geeignete Anhänger als Glieder des genannten gleislosen Gliederzuges beschrieben.

Aus der EP 1 847 443 A2 ist eine Mehrachslenkungsanlage bekannt, die für ein Fahrzeuggespann vorgesehen ist, beinhaltend wenigstens zwei Fahrzeugwagen (2a, 2b), (2b, 2c) und wenigstens ein Gelenk (7a, 7b) zur Verkoppelung zweier Fahrzeugwagen wobei wenigstens zwei Fahrzeugwagen jeweils eine Lenkachse (6) zur Radwinkelverstellung von mit der Lenkachse (6) in Wirkverbindung stehenden gelenkten Räder (11) aufweisen, wobei jeder Lenkachse (6) ein Lenkaktuator (3a, 3b, 3c) zur Radwinkelverstellung und eine Steuereinheit (8a, 8b, 8c) zur Steuerung und/oder Regelung der Lenkaktuatoren (3a, 3b, 3c) zugeordnet ist.

### Darstellung der Erfindung: Aufgabe, Lösung, Vorteile

Es ist daher die Aufgabe der vorliegenden Erfindung, einen gleislosen Routenzug zur Verfügung zu stellen, welcher sich durch eine gute Beladbarkeit, ein gutes Nachlaufverhalten mit geringer Spurabweichung und durch eine einfache Herstellbarkeit mit einem geringen technischen Aufwand auszeichnet. Ferner ist es eine Aufgabe der vorliegenden Erfindung, ein Verfahren zur Lenkung eines gleislosen Routenzuges zur Verfügung zu stellen, mittels welchem eine besonders gute Spurtreue des gleislosen Routenzuges erreicht werden kann.

Diese Aufgabe wird mit den Merkmalen der unabhängigen Ansprüche gelöst. Vorteilhafte Weiterbildungen der Erfindung sind in den abhängigen Ansprüchen angegeben.

Erfindungsgemäß ist ein gleisloser Routenzug vorgesehen, welcher mindestens ein Transportmodul und mindestens zwei Achsmodule aufweist, wobei jedes Transportmodul zwischen zwei Achsmodulen angeordnet ist. Jedes Achsmodul weist eine Radachse und eine Lenkvorrichtung zum Lenken der Radachse auf. Jede Lenkvorrichtung eines Achsmoduls ist dabei jeweils derart ausgebildet, dass die Lenkvorrichtung das ihm zugeordnete Achsmodul unabhängig von einer Lenkvorrichtung eines anderen Achsmoduls lenkt.

Bei dem erfindungsgemäßen Routenzug sind sowohl die Radachse als auch die Lenkvorrichtung an dem Achsmodul und nicht an dem Transportmodul angeordnet. Der Routenzug ist somit aus einem gliederbandartigen System alternierend angeordneter Achsmodule und Transportmodule ausgebildet und damit nicht aus einer Hintereinanderreihung von miteinander gekoppelten Transportmodulen bzw. Anhängern ausgebildet. Der Routenzug kann ein Transportmodul, bevorzugt mehrere hintereinander angeordnete Transportmodule, aufweisen, wobei die Transportmodule Lastaufnahmevorrichtungen aufweisen können, über welche die Transportmodule zu transportierende Lasten bzw. Güter aufnehmen können. Die Achsmodule stützen das Gewicht der Transportmodule und der zu transportierenden Lasten bzw. Güter über die Radachse, an welcher vorzugsweise zwei Räder befestigt sind, auf dem Boden ab. Jedes Achsmodul weist zusätzlich zu der Radachse eine Lenkvorrichtung auf, welche die Radachse derart ausrichtet, dass die Spurabweichungen bei den üblichen Fahrmanövern möglichst klein sind bzw. gegen Null gehen. Die Lenkvorrichtungen der einzelnen Achsmodule sind nicht miteinander gekoppelt bzw. verbunden, sondern die Lenkvorrichtung eines jeden Achsmoduls arbeitet unabhängig von den Lenkvorrichtungen der anderen Achsmodule. Die Lenkvorrichtungen der Achsmodule stehen bei dem erfindungsgemäßen Routenzug somit nicht in Wirkverbindung miteinander. Dadurch, dass die Lenkvorrichtungen der Achsmodule nicht miteinander gekoppelt bzw. in Wirkverbindung sind, ist auch keine Verbindung, beispielsweise in Form eines Gestänges, zwischen den einzelnen Lenkvorrichtungen bzw. Achsmodulen vorgesehen, welche ansonsten über die Transportmodule geführt sein müssten und damit die Beladbarkeit der Transportmodule behindern könnten. Die Transportmodule des erfindungsgemäßen Routenzuges sind hingegen in ihrer Beladbarkeit nicht eingeschränkt, so dass ein Beladen der Transportmodule mit rollbaren Transportgestellen von beiden Seiten ohne Schwierigkeiten erfolgen kann. Ferner ist auch der technische Aufwand bei der Herstellung eines derartigen erfindungsgemäßen Routenzuges reduziert, da keine aufwendig gestaltete und zu montierende Verbindung zwischen den einzelnen Achsmodulen bzw. den Lenkvorrichtungen der Achsmodule ausgebildet bzw. hergestellt werden muss. Dadurch, dass erfindungsgemäß jede Lenkvorrichtung eines Achsmoduls unabhängig von anderen Lenkvorrichtungen anderer Achsmodule arbeitet bzw. wirkt, ist auch eine Übertragung von Informationen und/oder Energie vom Schleppfahrzeug auf die Achsmodule bzw. von Achsmodul zu Achsmodul nicht erforderlich.

Die Achsmodule weisen zusätzlich zu der Radachse und der Lenkvorrichtung jeweils vorzugsweise einen ersten Kragarm und einen zweiten Kragarm auf, wobei der erste Kragarm und der zweite Kragarm bevorzugt über eine Gelenkverbindung mit der Radachse insbesondere mittelbar oder unmittelbar verbunden sind. Die beiden Kragarme, welche auch als Tragrahmen ausgebildet sein können, dienen als Verbindungsmittel zwischen den Achsmodulen und den Transportmodulen bzw. dem Schleppfahrzeug. Über den ersten Kragarm kann beispielsweise ein Transportmodul mit seiner entgegengesetzt der Fahrtrichtung gerichteten Rückseite an dem Achsmodul befestigt sein. Bei dem in dem Routenzug als erstes angeordneten Achsmodul kann über den ersten Kragarm das Schleppfahrzeug mit seiner Rückseite befestigt sein. Über den zweiten Kragarm kann beispielsweise ein Transportmodul mit seiner in Fahrtrichtung gerichteten Vorderseite an dem Achsmodul befestigt sein. Die Kragarme sind vorzugsweise aus einem steifen Material ausgebildet. In einem befestigten Zustand der Transportmodule bzw. des Schleppfahrzeuges an jeweils einem Kragarm ist die Verbindung zwischen den Kragarmen und den Transportmodulen bzw. dem Schleppfahrzeug starr ausgebildet, so dass eine Bewegung zwischen einem Kragarm und einem Transportmodul bzw. einem Schleppfahrzeug verhindert ist. Durch diese starre Verbindung können alle auftretenden Betriebskräfte und - momente zwischen dem jeweiligen Achsmodul und dem jeweiligen Transportmodul übertragen werden. Um die Transportmodule auswechseln zu können und/oder den Routenzug kürzer oder länger ausgestalten zu können, sind die Kragarme vorzugsweise derart ausgestaltet, dass die Transportmodule bzw. das Schleppfahrzeug leicht von den Kragarmen gelöst und auch wieder befestigt werden können. Hierdurch kann der Routenzug ohne großen Aufwand an sich ändernde betriebliche Bedingungen und Anforderungen angepasst werden.

Um insbesondere eine Kurvenfahrt des Routenzuges zu ermöglichen, sind der erste Kragarm und der zweite Kragarm vorzugsweise mittels einer Gelenkverbindung mit der Radachse verbunden. Durch diese Gelenkverbindung kann der erste Kragarm relativ zu dem zweiten Kragarm und umgekehrt verdreht werden, so dass die an den Kragarmen befestigten Transportmodule der Kurvenfahrt des Schleppfahrzeuges folgen können. Über die Gelenkverbindung sind die Kragarme mit der jeweiligen Radachse eines Achsmoduls verbunden, so dass eine definierte Drehbewegung zwischen jeweils einem Kragarm und der Radachse ermöglicht werden kann.

Die Gelenkvorrichtung weist bevorzugt mindestens ein Vertikaldrehgelenk auf, wobei das Vertikaldrehgelenk vorzugweise eine Drehachse aufweist, welche vertikal zur Längserstreckung der Kragarme ausgebildet ist. Das eine oder die mehreren Vertikaldrehgelenke, welche vorzugsweise in Form einer Welle ausgebildet sind, ermöglichen eine Relativbewegung der beiden Kragarme eines Achsmoduls zueinander. Durch die Drehachse der Vertikaldrehgelenke kann eine seitliche Verdrehbewegung der beiden Kragarme eines Achsmoduls vertikal zur Längserstreckung der Kragarme ermöglicht werden, so dass der Routenzug Kurven durchfahren kann. Das oder die Vertikaldrehgelenke sind bevorzugt steif und mit einer hohen Festigkeit ausgebildet, damit die Vertikaldrehgelenke Zugkräfte, die Gewichtskräfte der Transportmodule und der zu transportierenden Lasten sowie Kippmomente, die bei Kurvenfahrten infolge der Fliehkräfte und bei außermittigen Schwerpunktlagen entstehen können, übertragen können.

Die Gelenkverbindung kann beispielsweise genau ein Vertikaldrehgelenk aufweisen, wobei dann bevorzugt der erste Kragarm und der zweite Kragarm mit dem einen Vertikaldrehgelenk verbunden sind. Ist ein einziges Vertikaldrehgelenk vorgesehen, an welchen beide Kragarme eines Achsmoduls befestigt sind, kann die Lenkbewegung der Radachse vereinfacht werden, da dann die Radachse gelenkt werden kann ohne die mit dem entsprechenden Achsmodul verbundenen Transportmodule zu bewegen.

Alternativ ist es aber auch möglich, dass die beiden Kragarme eines Achsmoduls nicht unmittelbar über ein gemeinsames Vertikaldrehgelenk mit der Radachse verbunden sind, sondern dass die Gelenkverbindung ein erstes Vertikaldrehgelenk und ein zweites Vertikaldrehgelenk aufweist, wobei bevorzugt der erste Kragarm über das erste Vertikaldrehgelenk mit der Radachse verbunden ist und wobei der zweite Kragarm über das zweite Vertikaldrehgelenk mit der Radachse verbunden ist. Die beiden Vertikaldrehgelenke können hierbei beispielsweise auf einer mit der Radachse fest verbundenen Platte angeordnet und über diese Platte mit der Radachse und auch miteinander verbunden sein.

Weiter ist es möglich, dass die Gelenkverbindung ein Horizontaldrehgelenk aufweist, wobei das Horizontaldrehgelenk vorzugsweise eine Drehachse aufweist, welche sich insbesondere bei einer Geradeausfahrt des Routenzuges quer zur Fahrtrichtung des gleislosen Routenzuges erstreckt. Das Horizontaldrehgelenk kann in dem ersten Kragarm selber oder zwischen dem ersten Kragarm und der Radachse oder in dem zweiten Kragarm selber oder zwischen dem zweiten Kragarm und der Radachse angeordnet sein. Die Drehachse des Horizontaldrehgelenks kann eine Verdrehbewegung der Kragarme um das Horizontaldrehgelenk nach unten und nach oben ermöglichen, wodurch eine Fahrbewegung des Routenzuges beispielsweise über einen unebenen Boden, wie beispielsweise das Fahren auf einer Rampe mit einer Steigung, ausgeglichen werden kann.

Um eine optimale Lenkbewegung der Transportmodule mit einer sehr hohen Spurtreue erreichen zu können, ist die Lenkvorrichtung bevorzugt derart ausgebildet, dass die Lenkvorrichtung die Radachse in eine winkelhalbierende Stellung zwischen dem ersten Kragarm und dem zweiten Kragarm lenkt. Demzufolge ist es bevorzugt vorgesehen, dass ein erster, vorderer Lenkwinkel zwischen dem ersten Kragarm und der Radachse und dass ein zweiter, hinterer Lenkwinkel zwischen dem zweiten Kragarm und der Radachse durch die Lenkvorrichtung in eine im Wesentlichen gleich große Stellung gebracht werden. Die Lenkvorrichtung ist somit bevorzugt derart ausgebildet, dass sie die Radachse entsprechend justieren bzw. ausrichten kann, so dass die Radachse auch bei Kurvenfahrten in eine Stellung gebracht werden kann, bei welcher der erste, vordere Lenkwinkel gleich groß ist zu dem zweiten, hinteren Lenkwinkel. Die Lenkvorrichtung kann zum Lenken der Radachse aus einem mechanischen, hydraulischen, pneumatischen, elektromagnetischen oder elektromotorischen System ausgebildet sein.

Beispielsweise kann die Lenkvorrichtung mindestens zwei vorzugsweise starr ausgebildete Verbindungsstangen aufweisen, wobei eine erste Verbindungsstange mit einem ersten Ende mit dem ersten Kragarm und mit einem zweiten Ende mit der Radachse verbunden sein kann und wobei eine zweite Verbindungsstange mit einem ersten Ende mit dem zweiten Kragarm und mit einem zweiten Ende mit der Radachse verbunden sein kann, wobei die Verbindungsstangen jeweils mit ihrem ersten Ende oder ihrem zweiten Ende in einer Linearführung verschiebbar geführt sein können. Durch die Anordnung dieser mindestens zwei einseitig linear geführten Verbindungsstangen kann eine Lenkvorrichtung mit einer einfachen mechanischen Kinematik ausgebildet werden, bei welcher der erste, vordere Lenkwinkel und der zweite, hintere Lenkwinkel immer gleich groß sind und damit die Radachse immer in Richtung der Winkelhalbierenden zwischen den beiden Kragarmen ausgerichtet ist. Bei einer derartigen Lenkvorrichtung werden die beiden Lenkwinkel zwangsweise in Abhängigkeit des Winkels, auch Knickwinkel genannt, zwischen dem ersten Kragarm und dem zweiten Kragarm eingestellt. Eine derartige Lenkvorrichtung zeichnet sich durch einen einfachen Aufbau aus, wodurch die Herstellungskosten und auch der Wartungsaufwand gering sind. Ferner zeichnet sich eine derartige Lenkvorrichtung auch durch eine geringe Fehleranfälligkeit aus. Um die Steifigkeit einer derartigen Lenkvorrichtung erhöhen zu können, kann es weiter bevorzugt vorgesehen sein, dass diese vier Verbindungsstangen aufweist, wobei eine dritte Verbindungsstange ebenso wie die erste Verbindungsstange mit einem ersten Ende mit dem ersten Kragarm und mit einem zweiten Ende mit der Radachse verbunden ist und wobei eine vierte Verbindungsstange ebenso wie die zweite Verbindungsstange mit einem zweiten Ende mit der Radachse verbunden ist, wobei auch die dritte und die vierte Verbindungsstange jeweils mit ihrem ersten Ende oder ihrem zweiten Ende in einer Linearführung verschiebbar geführt sein können.

Eine Lenkvorrichtung mit einer einfachen mechanischen Kinematik, bei welcher der erste, vordere Lenkwinkel und der zweite, hintere Lenkwinkel immer gleich groß sind und damit die Radachse immer in Richtung der Winkelhalbierenden zwischen den beiden Kragarmen ausgerichtet ist, kann auch derart ausgebildet werden, indem die Lenkvorrichtung in Form einer Getriebeeinheit ausgebildet ist. Die Getriebeeinheit ermöglicht eine 1:1 Übersetzung, wodurch die Radachse in eine winkelhalbierende Stellung zwischen dem ersten Kragarm und dem zweiten Kragarm verbracht werden kann. Mittels der Getriebeeinheit kann eine Drehbewegung des ersten Kragarmes beispielsweise im Uhrzeigersinn in eine Drehbewegung des zweiten Kragarmes gegen den Uhrzeigersinn und umgekehrt umgeformt werden

Die Getriebeeinheit kann ein erstes mit dem ersten Kragarm verbundenes Getrieberad, ein zweites mit dem zweiten Kragarm verbundenes Getrieberad und mindestens ein drittes mit der Radachse verbundenes Getrieberad aufweisen, wobei das erste Getrieberad und das zweite Getrieberad über das mindestens eine dritte Getrieberad drehbeweglich verbunden sein können. Die Getrieberäder können dabei beispielsweise in Form von Kegelrädern ausgebildet sein, welche ineinander greifend angeordnet sind.

Ferner ist es auch möglich, dass die Lenkvorrichtung in Form eines Feder-Dämpfer-Systems ausgebildet ist. Mittels eines Feder-Dämpfer-Systems kann bei stationären als auch bei dynamischen Fahrmanövern eine besonders gute Spurtreue der Transportmodule erreicht werden. Ferner zeichnet sich ein Feder-Dämpfer-System durch einen einfachen, mechanischen Aufbau aus.

Das Feder-Dämpfer-System weist bevorzugt ein erstes mit dem ersten Kragarm und der Radachse verbundenes Federelement, ein zweites mit dem zweiten Kragarm und der Radachse verbundenes Federelement und mindestens ein Dämpferelement auf. Die Federelemente können insbesondere als lineare Federelemente oder als Dreh- bzw. Torsionsfedern ausgeführt sein. Die Federelemente sind bevorzugt derart ausgebildet, dass sie ein resultierendes Drehmoment hervorrufen können, welches die Radachse in Richtung der Winkelhalbierenden zwischen dem ersten Kragarm und dem zweiten Kragarm ausrichtet.

Um auch bei dynamischen Fahrmanövern, wie einer Einfahrt in eine Kurve oder einer Ausfahrt aus einer Kurve, eine hohe Spurtreue erreichen zu können, ist zusätzlich zu den beiden Federelementen bevorzugt mindestens ein Dämpferelement vorgesehen. Das Dämpferelement kann mit der Radachse und dem ersten Kragarm oder dem zweiten Kragarm verbunden sein. Das Dämpferelement ist vorzugsweise derart ausgebildet, dass es eine Kraft bzw. ein Drehmoment erzeugen kann, die bzw. das von dem Betrag und der Richtung der Geschwindigkeit abhängt, mit der die Länge bzw. der Winkel des Dämpferelementes verändert werden kann. Die Kraft bzw. das Drehmoment des Dämpferelementes wirkt dabei vorzugsweise stets entgegen der Bewegungsrichtung. Dadurch wird eine zeitverzögerte Lenkung der Radachse ermöglicht. Bei dynamischen Fahrmanövern ist es vorteilhaft, wenn sich der erste, vordere Lenkwinkel schneller als der zweite, hintere Lenkwinkel verdreht. Dies kann dadurch erreicht werden, dass sich der erste Kragarm gegenüber der Radachse schneller verdreht als der zweite Kragarm gegenüber der Radachse, wobei die Geschwindigkeit der Verdrehbewegung des zweiten Kragarmes zu der Radachse mittels des Dämpferelementes gedämpft bzw. reduziert werden kann.

Bevorzugt ist es vorgesehen, dass das Dämpferelement derart ausgebildet ist, dass die Wirkung des Dämpferelementes in Abhängigkeit von der Fahrgeschwindigkeit der jeweiligen Radachse veränderbar ist, wodurch der Einfluss der Fahrgeschwindigkeit auf die Spurtreue verringert oder sogar ganz eliminiert werden kann. Die Fahrgeschwindigkeit einer Radachse, d. h. die Geschwindigkeit der Mitte der Radachse, kann aus lokal verfügbaren Bewegungsgrößen, beispielsweise der Drehgeschwindigkeit der Räder der Radachse, bestimmt werden.

Um das Lenkverhalten des Routenzuges an die jeweiligen Betriebsbedingungen anpassen zu können, kann das Dämpferelement ferner verstellbar ausgeführt sein. Dies ermöglicht es einem Benutzer, die Spurtreue bzw. das Nachlaufverhalten der Transportmodule des Routenzuges bei Kurvenfahrten durch eine Justierung des Dämpferelementes zu optimieren.

Bei einem Feder-Dämpfer-System ist es besonders bevorzugt vorgesehen, wenn das Feder-Dämpfer-System drei Dämpferelemente aufweist, welche jeweils mit einem ersten Ende an der Radachse und mit einem zweiten Ende an einem mit der Gelenkverbindung verbundenen Befestigungsrahmen verbunden sind, wobei vorzugsweise ein erstes Dämpferelement und ein zweites Dämpferelement in einem Winkel < 90° zur Längserstreckung der Radachse geneigt angeordnet sind und mit einer ersten Seite der Radachse verbunden sind und wobei vorzugsweise ein drittes Dämpferelement vertikal, vorzugsweise in einem Winkel von 90°, zur Längserstreckung der Radachse angeordnet ist und mit einer der ersten Seite gegenüberliegenden zweiten Seite der Radachse verbunden ist. Durch diese Ausgestaltung des Feder-Dämpfer-Systems kann eine besonders gute Spurtreue bei Kurvenfahrten erreicht werden.

Weiter ist es möglich, dass die Lenkvorrichtung einen motorischen Antrieb aufweist, welcher mittels einer elektronischen Steuereinheit gesteuert werden kann. Die Radachse eines Achsmoduls kann bei einer derartigen Lenkvorrichtung mithilfe des motorischen Antriebs gelenkt werden, wobei der motorische Antrieb, auch motorischer Stellantrieb genannt, einer jeden Lenkvorrichtung eines Achsmoduls durch die elektronische Steuereinheit in Abhängigkeit von den Zeitverläufen der Fahrgeschwindigkeit und des Lenkwinkels des Schleppfahrzeuges bzw. in Abhängigkeit von den Zeitverläufen der Fahrgeschwindigkeit und des Lenkwinkels des unmittelbar davor fahrenden Achsmoduls gesteuert werden kann. Die Lenkvorrichtungen der einzelnen Achsmodule arbeiten unabhängig voneinander, sind sozusagen autark, und damit nicht miteinander verbunden bzw. nicht in Wirkverbindung miteinander. Der motorische Antrieb einer Lenkvorrichtung weist vorzugsweise einen Motor zur Erzeugung einer mechanischen Stellleistung und ein Getriebe zur Anpassung eines Stellweges und eines Stellmomentes bzw. einer Stellkraft auf. Der motorische Antrieb der Lenkvorrichtung kann eine Art Lenkwinkelkorrekturvorrichtung ausbilden. Der motorische Antrieb kann durch die elektronische Steuereinheit so gesteuert bzw. geregelt werden, dass der Achsmittelpunkt des einzustellenden bzw. zu lenkenden Achsmoduls möglichst genau der Bahnkurve, auch Trajektorie genannt, des Achsmittelpunkts des in Fahrtrichtung des Routenzuges gesehenen unmittelbar davor angeordneten Achsmoduls folgt. Hierzu werden die aktuelle Position des Achsmittelpunktes des einzustellenden bzw. zu lenkenden Achsmoduls und die Bahnkurve des Achsmittelpunktes des in Fahrtrichtung des Routenzuges gesehenen unmittelbar davor angeordneten Achsmoduls bestimmt. Zur Bestimmung der Achsmittelpunkte bzw. der Koordinaten der Achsmittelpunkte können Zustands- und/oder Bewegungsgrößen, wie die Beschleunigungen und/oder die Geschwindigkeiten an zwei verschiedenen Punkten der Radachse des Achsmoduls, die Drehbeschleunigung der Radachse um ihre sich senkrecht zur Fahrtrichtung des Routenzuges erstreckende Hochachse, die Drehgeschwindigkeiten der beiden Räder eines Achsmoduls, die Radlasten bzw. Radaufstandskräfte und/oder die Winkel zwischen der Radachse und dem davor bzw. dahinter angeordneten Kragarm des Achsmoduls. Diese Zustands- und/oder Bewegungsgrößen können lokal an dem entsprechenden Achsmodul gemessen werden, so dass eine datentechnische Verbindung der einzelnen Achsmodule miteinander über Leitungen oder per Funk nicht notwendig ist. Alternativ ist es jedoch auch möglich, dass die Bestimmung der Zustands- und/oder Bewegungsgrößen des einzustellenden bzw. zu lenkenden Achsmoduls durch eine Kommunikation mit dem in Fahrtrichtung des Routenzuges gesehenen unmittelbar davor angeordneten Achsmoduls erfolgen kann. Sind die Achsmittelpunkte der jeweiligen Achsmodule bestimmt, kann der Abstand zwischen dem Achsmittelpunkt des einzustellenden bzw. zu lenkenden Achsmoduls und dem Achsmittelpunkt des in Fahrtrichtung des Routenzuges gesehenen unmittelbar davor angeordneten Achsmoduls ermittelt werden. Ist der Abstand der Achsmittelpunkte bekannt, können mittels dieser Daten und geeigneter Algorithmen die für die Lenkregelung der Radachse des zu lenkenden Achsmoduls benötigten Größen bestimmt werden, so dass der Lenkwinkel des einzustellenden bzw. zu lenkenden Achsmoduls derart verändert werden kann, dass der Achsmittelpunkt des einzustellenden bzw. zu lenkenden Achsmoduls wieder auf die vorgesehene Bahnkurve gelenkt wird. In der elektronischen Steuereinheit kann ein mathematisches Modell einer Bewegungsdynamik des gesamten Routenzuges hinterlegt sein, mittels welchem zu jedem Zeitpunkt die optimalen Lenkwinkel der einzelnen Radachsen berechnet werden können. Eine Einstellung der dabei ermittelten Lenkwinkel kann beispielweise über einen geregelten elektromotorischen Lenkantrieb erfolgen. Hierzu werden die tatsächlichen Lenkwinkel vorzugsweise kontinuierlich gemessen und die gemessenen Signale werden zu dem Regler der Lenkvorrichtung zurückgeführt. Dadurch, dass dieser Vorgang und damit die Korrektur des Lenkwinkels eines Achsmoduls vorzugsweise kontinuierlich, in kurzen Intervallen erfolgt, kann mittels einer derartigen Lenkvorrichtung eine optimale Spurtreue bzw. ein optimales Nachlaufverhalten des Routenzuges ohne Spurabweichungen auf der Bahnkurve des Routenzuges erreicht werden.

Die Lenkvorrichtung benötigt für die Bestimmung bzw. Messung der Zustands- und/oder Bewegungsgrößen, für die elektronische Steuereinheit und für den motorischen Antrieb Energie. Die benötigte Energie kann beispielsweise vom Schleppfahrzeug in elektrischer, pneumatischer oder hydraulischer Form bereitgestellt werden und durch elektrische Leitungen, wie Kabel, zu den einzelnen Achsmodulen übertragen werden. Alternativ ist es auch möglich, dass die benötigte Energie aus der Drehbewegung der jeweiligen Räder der Achsmodule, beispielsweise mithilfe eines elektrischen Generators, bereitgestellt werden kann, so dass die benötigte Energie an dem jeweiligen Achsmodul selber erzeugt wird. Damit auch bei stillstehendem Routenzug zumindest zeitweise Energie zur Verfügung stehen kann, weist bei dieser Ausgestaltung vorzugsweise jedes Achsmodul einen Energiespeicher auf.

Ein in Fahrtrichtung des Routenzuges gesehenes letztes Achsmodul ist mit seinem ersten Kragarm vorzugsweise mit einem Transportmodul und mit seinem zweiten Kragarm vorzugsweise mit einem mindestens ein Rad aufweisenden Radgestell verbunden. Das in Fahrtrichtung gesehene letzte Achsmodul bildet den Abschluss des Routenzuges. In Fahrtrichtung gesehen hinter dem letzten Achsmodul ist somit kein weiteres Transportmodul angeordnet, welches zur Ausrichtung der Radachse des letzten Achsmoduls dienen könnte. Um dies ausgleichen zu können, ist vorzugsweise ein Radgestell hinter dem letzten Achsmodul angeordnet, welches mit dem zweiten Kragarm verbunden ist. Das Radgestell, welches ein Rad aufweisen kann oder aber auch als Radachse mit zwei Rädern ausgebildet sein kann, ist entweder ebenso wie die Radachse des letzten Achsmoduls gegenüber dem zweiten Kragarm um eine Drehachse vertikal zur Längserstreckung des zweiten Kragarmes verdrehbar oder fest bzw. starr mit dem zweiten Kragarm verbunden.

Um bei einer stationären Kreisfahrt des Routenzuges eine Spurtreue des gesamten Routenzuges gewährleisten zu können, ist es bevorzugt vorgesehen, dass zwischen dem in Fahrtrichtung des Routenzuges gesehenen letzten Achsmodul und dem Radgestell ein Lenkgestell angeordnet ist. Die Anordnung eines Lenkgestells ist insbesondere dann vorteilhaft, wenn die Länge des zweiten Kragarms des letzten Achsmoduls, welcher zwischen der Gelenkverbindung des letzten Achsmoduls und dem Radgestell angeordnet ist, größer oder kleiner ist als die Hälfte des Abstands zwischen zwei hintereinander angeordneten Achsmodulen, zwischen denen ein Transportmodul angeordnet ist.

Das Lenkgestell kann vorzugsweise eine Verbindungsstange aufweisen, welche mit einem ersten Ende mit der Radachse des letzten Achsmoduls und mit einem dem ersten Ende gegenüberliegenden zweiten Ende mit einer Radachse des Radgestells verbunden ist.

Weiter ist es auch möglich, dass das Lenkgestell eine erste Verbindungsstange, eine zweite Verbindungsstange und ein verschiebebeweglich an dem zweiten Kragarm des in Fahrtrichtung gesehenen letzten Achsmoduls gelagertes Führungselement aufweist, wobei die erste Verbindungsstange mit dem Führungselement und der Radachse des letzten Achsmoduls verbunden sein kann und wobei die zweite Verbindungsstange mit dem Führungselement und einer Radachse des Radgestells verbunden sein kann.

Weist die Lenkvorrichtung einen motorischen Antrieb und eine elektronische Steuereinheit auf, sind ein Radgestell und ein Lenkgestell nicht mehr notwendig.

Weiter können mindestens zwei Transportmodule in Form von U-förmigen Tragrahmen vorgesehen sein, wobei die mindestens zwei Transportmodule an ihren oberen Enden vorzugsweise mindestens einen nach außen gerichteten Tragarm mit jeweils einem Kopplungselement aufweisen, wobei mittels der Kopplungselemente sich gegenüberliegend angeordnete Tragarme benachbart zueinander angeordneter Transportmodule miteinander bevorzugt gelenkig gekoppelt sind. Die Kopplungselemente sich gegenüberliegend angeordneter Tragarme können mit einer an der Gelenkverbindung angeordneten Steckachse verbunden sein.

Die Lösung der erfindungsgemäßen Aufgabe erfolgt ferner mittels eines Verfahrens zur Lenkung eines wie vorstehend beschriebenen, aus- und weitergebildeten gleislosen Routenzuges, bei welchem ein Lenkwinkel der Lenkvorrichtung eines Achsmoduls an eine Bahnkurve des Routenzuges angepasst wird. Durch die Anpassung des Lenkwinkels der Lenkvorrichtung eines jeden Achsmoduls des Routenzuges kann über die Länge des Routenzuges eine besonders gute Spurtreue des Routenzuges erreicht werden, bei welchem die einzelnen Achsmodule möglichst genau einer Bahnkurve des Routenzuges folgen. Dabei wird der Lenkwinkel für jede Lenkvorrichtung unabhängig von den Lenkwinkeln der anderen Lenkvorrichtungen der anderen Achsmodule eingestellt, so dass jede Lenkvorrichtung der einzelnen Achsmodule autark zu den Lenkvorrichtungen der anderen Achsmodule arbeitet und nach einem entsprechenden Berechnungsvorgang nachgesteuert werden kann. Zur Einstellung des Lenkwinkels weist jede einzelne Lenkvorrichtung vorzugsweise einen motorischen Antrieb und eine elektronische Steuereinheit auf.

Um die Spurtreue weiter zu erhöhen, ist es bevorzugt vorgesehen, dass bei einer Fahrbewegung des Routenzuges die Anpassung des Lenkwinkels kontinuierlich, in in einem geringen Zeitabstand aufeinanderfolgenden Intervallen erfolgt. Hierbei wird der Lenkwinkel während einer Fahrbewegung des Routenzuges in definierten, kurz aufeinander folgenden Zeitintervallen vorzugsweise immer wieder neu bestimmt, so dass der Lenkwinkel einer Lenkvorrichtung eines Achsmoduls kontinuierlich während der gesamten Fahrbewegung des Routenzuges korrigiert und entsprechend an die Bahnkurve des Routenzuges angepasst werden kann.

Zur Anpassung des Lenkwinkels werden vorzugsweise ein Achsmittelpunkt des zu lenkenden Achsmoduls und ein Achsmittelpunkt des in Fahrtrichtung des Routenzuges gesehenen unmittelbar davor angeordneten Achsmoduls bestimmt. Zur Bestimmung der Achsmittelpunkte bzw. der Koordinaten der Achsmittelpunkte können Zustands- und/oder Bewegungsgrößen, wie die Beschleunigungen und/oder die Geschwindigkeiten an zwei verschiedenen Punkten der Radachse des Achsmoduls, die Drehbeschleunigung der Radachse um ihre sich senkrecht zur Fahrtrichtung des Routenzuges erstreckende Hochachse, die Drehgeschwindigkeiten der beiden Räder eines Achsmoduls, die Radlasten bzw. Radaufstandskräfte und/oder die Winkel zwischen der Radachse und dem davor bzw. dahinter angeordneten Kragarm des Achsmoduls. Diese Zustands- und/oder Bewegungsgrößen können lokal an dem entsprechenden Achsmodul gemessen werden, so dass eine datentechnische Verbindung der einzelnen Achsmodule miteinander über Leitungen oder per Funk nicht notwendig ist. Alternativ ist es jedoch auch möglich, dass die Bestimmung der Zustands- und/oder Bewegungsgrößen des einzustellenden bzw. zu lenkenden Achsmoduls durch eine Kommunikation mit dem in Fahrtrichtung des Routenzuges gesehenen unmittelbar davor angeordneten Achsmoduls erfolgen kann. Sind die Achsmittelpunkte der jeweiligen Achsmodule bestimmt, kann der Abstand zwischen dem Achsmittelpunkt des einzustellenden bzw. zu lenkenden Achsmoduls und dem Achsmittelpunkt des in Fahrtrichtung des Routenzuges gesehenen unmittelbar davor angeordneten Achsmoduls ermittelt werden. Ist der Abstand der Achsmittelpunkte bekannt, können mittels dieser Daten und geeigneter Algorithmen die für die Lenkregelung der Radachse des zu lenkenden Achsmoduls benötigten Größen bestimmt werden, so dass der Lenkwinkel des einzustellenden bzw. zu lenkenden Achsmoduls derart verändert werden kann, dass der Achsmittelpunkt des einzustellenden bzw. zu lenkenden Achsmoduls wieder auf die vorgesehene Bahnkurve gelenkt wird.

### Kurze Beschreibung der Zeichnungen

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigen:
Fig. 1 eine schematische Darstellung eines gleislosen Routenzuges gemäß der Erfindung,
Fig. 2 eine schematische Ausschnittdarstellung des in Fig. 1 gezeigten Routenzuges mit drei Achsmodulen und zwei Transportmodulen,
Fig. 3 eine schematische Darstellung eines Achsmoduls eines wie in Fig. 1 gezeigten Routenzuges,
Fig. 4 eine weitere schematische Darstellung eines Achsmoduls eines wie in Fig. 1 gezeigten Routenzuges,
Fig. 5 eine weitere schematische Darstellung eines Achsmoduls eines wie in Fig. 1 gezeigten Routenzuges,
Fig. 6 eine weitere schematische Darstellung eines Achsmoduls eines wie in Fig. 1 gezeigten Routenzuges,
Fig. 7 eine weitere schematische Darstellung eines Achsmoduls eines wie in Fig. 1 gezeigten Routenzuges,
Fig. 8 eine weitere schematische Darstellung eines Achsmoduls eines wie in Fig. 1 gezeigten Routenzuges,
Fig. 9 eine weitere schematische Darstellung eines Achsmoduls eines wie in Fig. 1 gezeigten Routenzuges,
Fig. 10 eine weitere schematische Darstellung eines Achsmoduls eines wie in Fig. 1 gezeigten Routenzuges,
Fig. 11 eine schematische Darstellung eines letzten Achsmoduls eines wie in Fig. 1 gezeigten Routenzuges mit einem dahinter angeordneten Radgestell,
Fig. 12 eine weitere schematische Darstellung eines Achsmoduls eines wie in Fig. 1 gezeigten Routenzuges,
Fig. 13 eine weitere schematische Darstellung eines Achsmoduls eines wie in Fig. 1 gezeigten Routenzuges
Fig. 14 eine schematische Darstellung einer Geometrie einer stationären Kreisfahrt eines gemäß einer möglichen Ausgestaltung ausgebildeten Routenzuges,
Fig. 15 eine schematische Darstellung einer Verbindung eines letzten Achsmoduls mit einem Radgestell bei einem wie in Fig. 14 gezeigten Routenzug,
Fig. 16 eine schematische Darstellung einer Geometrie einer stationären Kreisfahrt eines gemäß einer weiteren möglichen Ausgestaltung ausgebildeten Routenzuges,
Fig. 17 eine schematische Darstellung einer Verbindung eines letzten Achsmoduls mit einem Radgestell bei einem wie in Fig. 16 gezeigten Routenzug,
Fig. 18 eine schematische Darstellung einer Geometrie einer stationären Kreisfahrt eines gemäß einer weiteren möglichen Ausgestaltung ausgebildeten Routenzuges,
Fig. 19 eine schematische Darstellung einer Verbindung eines letzten Achsmoduls mit einem Radgestell bei einem wie in Fig. 18 gezeigten Routenzug, und
Fig. 20 eine schematische Ausschnittdarstellung des in Fig. 1 gezeigten Routenzuges mit drei Achsmodulen und zwei Transportmodulen gemäß einer weiteren Ausgestaltung.

### Bevorzugte Ausführungsformen der Erfindung

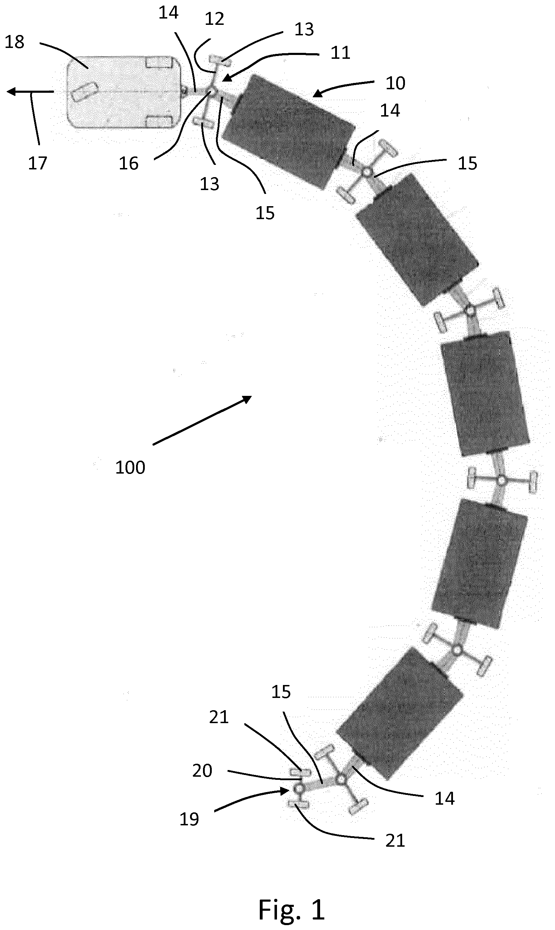

Fig. 1 zeigt schematisch einen gleislosen Routenzug 100. Der Routenzug 100 weist mehrere, hier fünf, hintereinander angeordnete Transportmodule 10 auf. Jedes Transportmodul 10 ist zwischen zwei Achsmodulen 11 angeordnet.

Die Achsmodule 11 weisen jeweils eine Radachse 12 mit zwei daran angeordneten Rädern 13 auf. Weiter weist jedes Achsmodul 11 einen ersten Kragarm 14 und einen zweiten Kragarm 15 auf, wobei die Kragarme 14, 15 ungefähr mittig entlang der Längserstreckung der Radachse 12 miteinander über eine Gelenkverbindung 16 verbunden sind, so dass die Kragarme 14, 15 relativ zueinander verdrehbar sind.

Bei einem Achsmodul 11, welches zwischen zwei Transportmodulen 10 angeordnet ist, ist der erste Kragarm 14 mit einem in Fahrtrichtung 17 gesehenen vorderen Transportmodul 10 und der zweite Kragarm 15 mit einem in Fahrtrichtung 17 gesehenen hinteren Transportmodul 10 verbunden. Eine Ausnahme bilden das in Fahrtrichtung 17 gesehene erste Achsmodul 11 und das in Fahrtrichtung 17 gesehene letzte Achsmodul 11. Bei dem in Fahrtrichtung 17 gesehenen ersten Achsmodul 11 ist der erste Kragarm 14 mit einem Schleppfahrzeug 18 verbunden, welches den Routenzug 100 zieht. Der zweite Kragarm 15 ist mit dem ersten Transportmodul 10 des Routenzuges 100 verbunden. Bei dem in Fahrtrichtung 17 gesehenen letzten Achsmodul 11 ist der erste Kragarm 14 mit dem letzten Transportmodul 10 des Routenzuges 100 verbunden. Der zweite Kragarm 15 des in Fahrtrichtung 17 gesehenen letzten Achsmoduls 11 ist mit einem Radgestell 19 verbunden, welches bei der hier gezeigten Ausgestaltung durch eine Radachse 20 mit zwei Rädern 21 ausgebildet ist, wobei die Radachse 20 des Radgestells 19 eine kürzere Länge aufweist als die Radachsen 12 der Achsmodule 11.

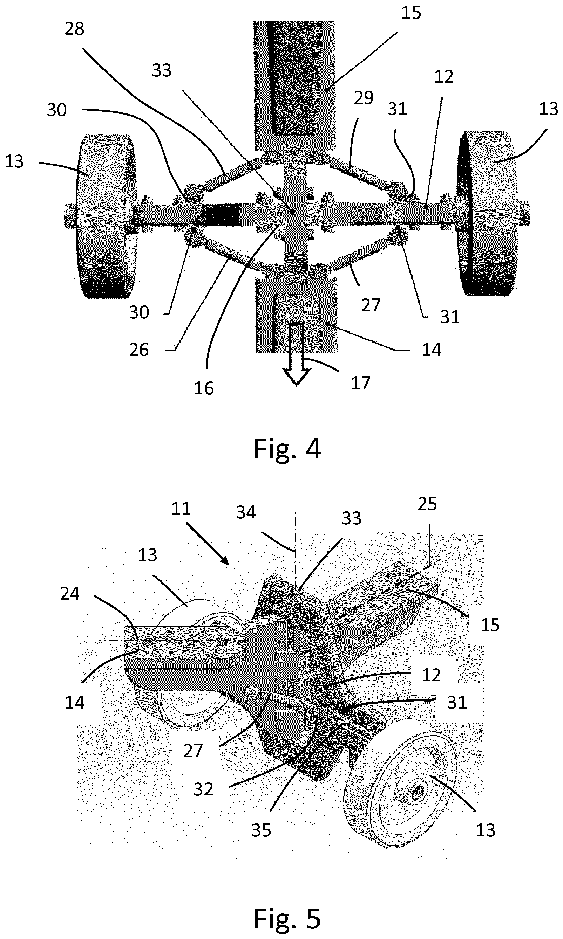

Jedes Achsmodul 11 weist zusätzlich zu seiner Radachse 12 und den zwei Kragarmen 14, 15 eine in Fig. 1 nicht dargestellte Lenkvorrichtung auf. Die Lenkvorrichtung ist in den Fig. 4 - 10 in verschiedenen Ausgestaltungen gezeigt. Die Lenkvorrichtungen der Achsmodule 11 sind jeweils derart ausgebildet, dass jede Lenkvorrichtung das ihm zugeordnete Achsmodul 11 unabhängig von einer Lenkvorrichtung eines anderen Achsmoduls 11 lenkt. Die Lenkvorrichtungen der einzelnen Achsmodule 11 sind nicht miteinander gekoppelt bzw. verbunden, sondern die Lenkvorrichtung eines jeden Achsmoduls 11 arbeitet unabhängig von den Lenkvorrichtungen der anderen Achsmodule 11, so dass die Lenkvorrichtungen der einzelnen Achsmodule 11 nicht in Wirkverbindung miteinander stehen.

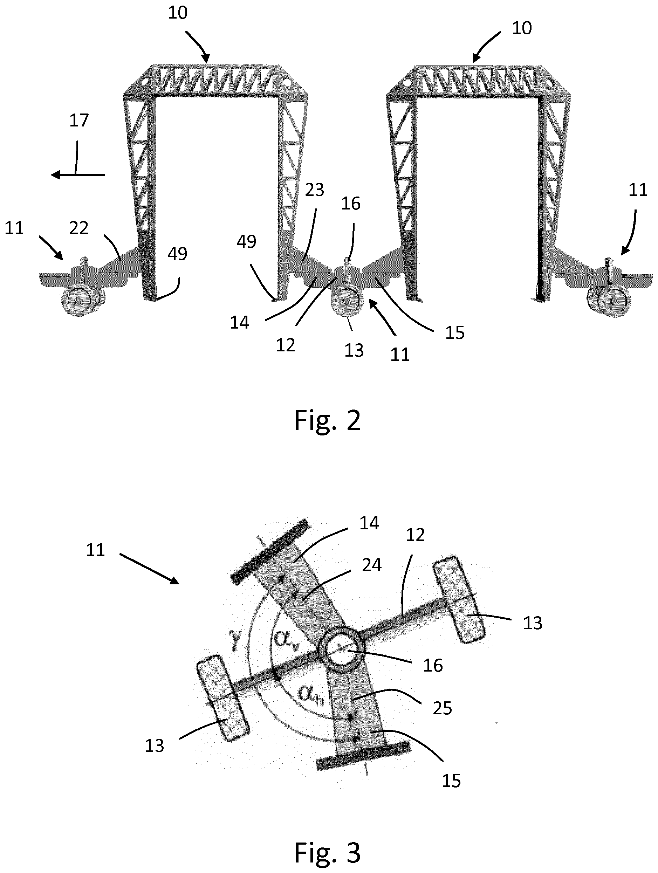

Fig. 2 zeigt einen Ausschnitt eines Routenzuges 100 mit zwei hintereinander angeordneten Transportmodulen 10, welche jeweils zwischen zwei Achsmodulen 11 angeordnet sind. Die Transportmodule 10 sind jeweils in Form von U-förmigen Tragrahmen ausgebildet, welche von beiden Seiten ohne irgendwelche Behinderungen mit Transportlasten be- und entladen werden können. Die Transportmodule 10 weisen hierzu geeignete Vorrichtungen zur Aufnahme der Lasten auf. Beispielsweise können an den Richtung Fahrbahnboden gerichteten unteren Enden der Transportmodule 10 jeweils ein oder mehrere Winkelprofile 49 als Lastaufnahmemittel angeordnet sein, wie in Fig. 2 gezeigt ist.

Jedes Transportmodul 10 weist zwei Verbindungselemente 22, 23 auf, wobei das in Fahrtrichtung 17 gesehene vordere Verbindungselement 22 mit dem zweiten Kragarm 15 eines vor dem Transportmodul 10 angeordneten Achsmoduls 11 starr verbunden ist und wobei das in Fahrtrichtung 17 gesehene hintere Verbindungselement 23 mit dem ersten Kragarm 14 eines hinter dem Transportmodul 10 angeordneten Achsmoduls 11 starr verbunden ist, so dass keine Verdrehbewegung zwischen den Kragarmen 14, 15 und den Verbindungselementen 22, 23 beispielsweise bei einer Kurvenfahrt des Routenzuges 100 möglich ist. Um die Transportmodule 10 von den Achsmodulen 11 wieder lösen zu können, sind die Verbindungen der Verbindungselemente 22, 23 mit einem jeweiligen Kragarm 14, 15 lösbar ausgebildet. Zur Erhöhung der Stabilität sind die Verbindungselemente 22, 23 bei der hier gezeigten Ausgestaltung keilförmig ausgebildet.

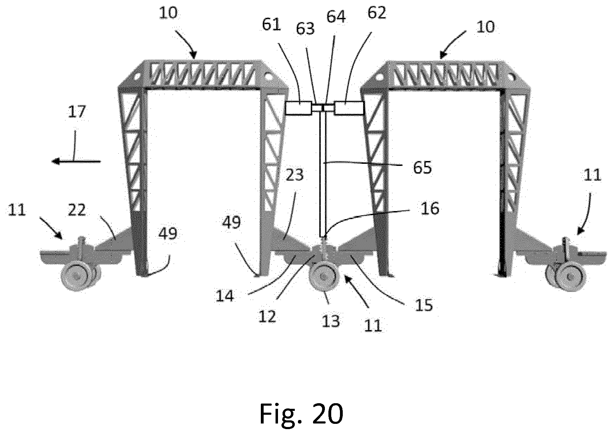

Bei der Ausgestaltung der Transportmodule 10 in Form von U-förmigen Tragrahmen wirken sehr hohe Kräfte auf die Transportmodule 10, da über jedes Transportmodul 10 die gesamte Zugkraft durch das Schleppfahrzeug 18 mit Spitzlasten und Momenten übertragen wird. Dadurch entstehen hohe Biegemomente in den in Form von U-förmigen Tragrahmen ausgebildeten Transportmodulen 10. Um die auf die Transportmodule 10 wirkenden Kräfte und Momente zu reduzieren, ist in Fig. 20 eine zu Fig. 2 alternative Ausgestaltung gezeigt.

Fig. 20 zeigt ebenso wie Fig. 2 einen Ausschnitt eines Routenzuges 100 mit zwei hintereinander angeordneten Transportmodulen 10, welche jeweils zwischen zwei Achsmodulen 11 angeordnet sind. An den Transportmodulen 10 ist an ihren oberen Enden jeweils ein nach außen gerichteter Tragarm 61, 62 angeordnet. An den freien Enden der Tragarme 61, 62 ist jeweils ein Kopplungselement 63, 64, beispielsweise in Form eines Scharniers, angeordnet. Über die Kopplungselemente 63, 64 sind die beiden sich gegenüberliegenden Tragarme 61, 62 benachbart zueinander angeordneter Transportmodule miteinander gelenkig gekoppelt, indem die Kopplungselemente 63, 64 beispielsweise ineinandergreifen. Die Kopplungselemente 63, 64 sind wiederum mit einer Steckachse 65, die an der Gelenkverbindung 16 angeordnet ist, verbunden. Die Steckachse 65 erstreckt sich senkrecht zur Fahrtrichtung 17 ausgehend von der Gelenkverbindung 16 bis hin zu den Kopplungselementen 63, 64. Die Steckachse 65 bildet eine Drehachse zwischen den benachbart zueinander angeordneten Transportmodulen 10 konzentrisch mit der Hochachse der Gelenkverbindung 16. Durch die gelenkige Verbindung der Transportmodule 10 miteinander an ihren oberen Enden mittels der Tragarme 61, 62, der Kopplungselemente 63, 64 und der Steckachse 65 können die auf die Transportmodule 10 wirkenden Kräfte unter Umgehung der Lenkvorrichtung der Achsmodule 11 unmittelbar auf die anderen Transportmodule 10 übergeleitet und damit gleichmäßig auf alle Transportmodule 10 verteilt werden.

Fig. 3 zeigt eine schematische Darstellung eines Achsmoduls 11, mit einer Radachse 12, an welcher zwei Räder 13 angeordnet sind, sowie einem ersten Kragarm 14 und einem über eine Gelenkverbindung 16 mit dem ersten Kragarm 14 verbundenen zweiten Kragarm 15. Die Längsachsen 24, 25 der beiden über die Gelenkverbindung 16 mit der Radachse 12 verbundenen Kragarme 14, 15 bilden einen Knickwinkel γ des Achsmoduls 11. Bei einer Geradeausfahrt des Routenzuges 100 beträgt der Knickwinkel y = 180°. Bei einer Linkskurvenfahrt ist der Knickwinkel γ < 180°, wie dies in Fig. 3 gezeigt ist. Und bei einer Rechtskurvenfahrt ist der Knickwinkel γ > 180°.

Die Position der Radachse 12 unterteilt den Knickwinkel y in einen ersten, vorderen Lenkwinkel αᵥ, welcher zwischen der Radachse 12 und dem ersten Kragarm 14 bzw. der Längsachse 24 des ersten Kragarmes 14 ausgebildet ist, und in einen zweiten, hinteren Lenkwinkel αₕ, welcher zwischen der Radachse 12 und dem zweiten Kragarm 15 bzw. der Längsachse 25 des zweiten Kragarmes 15 ausgebildet ist, so dass gilt: γ = αᵥ+ αₕ.

In Fig. 4 bis 7 sind Ausführungen einer Lenkvorrichtung gezeigt, bei welchen die beiden Lenkwinkel αᵥ und αₕ stets gleich groß sind. Die Lenkvorrichtung ist damit derart ausgebildet, dass sie die Radachse 12 derart lenkt, dass die Radachse 12 immer in Richtung der Winkelhalbierenden des Knickwinkels y ausgerichtet ist, wobei die Winkelhalbierende derart definiert ist, dass in der Winkelhalbierenden die Lenkwinkel αᵥ und αₕ gleich groß sind.

Fig. 4 und 5 zeigen eine Ausgestaltung einer Lenkvorrichtung, bei welcher die Lenkvorrichtung in Form eines Scherenmechanismus ausgebildet ist. Die Lenkvorrichtung ist dabei bei der hier gezeigten Ausführung aus vier Verbindungsstangen 26, 27, 28, 29 ausgebildet, welche jeweils mit einem ihrer Enden in einer Linearführung 30, 31 geführt sind. Eine erste und eine dritte Verbindungsstange 26, 28 sind jeweils mit einem ersten Ende mit dem ersten Kragarm 14 und mit einem zweiten Ende mit der Radachse 12 verbunden. Eine zweite und eine vierte Verbindungsstange 27, 29 sind jeweils mit einem ersten Ende mit dem zweiten Kragarm 15 und mit einem zweiten Ende mit der Radachse 12 verbunden. Die Befestigung der Verbindungsstangen 26, 27, 28, 29 mit den Kragarmen 14, 15 ist jeweils ortsfest ausgebildet, so dass die Verbindungsstangen 26, 27, 28, 29 nicht entlang der Kragarme 14, 15 verschoben werden können. Jedoch ist die Befestigung der Verbindungsstangen 26, 27, 28, 29 mit den Kragarmen 14, 15 gelenkig ausgebildet, so dass die Verbindungsstangen 26, 27, 28, 29 beispielsweise bei Kurvenfahrten des Routenzuges 100 um den Befestigungspunkt an den Kragarmen 14, 15 verschwenkt werden können. An der Radachse 12 sind die Verbindungsstangen 26, 27, 28, 29 hingegen in der Linearführung 30, 31 linear geführt, so dass die Verbindungsstangen 26, 27, 28, 29 entlang der Längserstreckung der Radachse 12 verschoben werden können.

Die Linearführungen 30, 31 erstrecken sich jeweils rechts und links von der Mitte der Radachse 12 aus gesehen, wobei sich eine erste Linearführung 30 in Fahrtrichtung 17 gesehen links von der Gelenkverbindung 16 in Richtung des Rades 13 erstreckt und sich eine zweite Linearführung 31 in Fahrtrichtung 17 gesehen rechts von der Gelenkverbindung 16 in Richtung des Rades 13 erstreckt. Die Linearführungen 30, 31 weisen in der Radachse 12 nutförmige bzw. schlitzförmige Ausnehmungen 35 auf, in welchen jeweils ein Gleitelement 32 der Linearführungen 30, 31 geführt sind. An den Gleitelementen 32 sind jeweils zwei der Verbindungsstangen 26, 27, 28, 29 über eine Drehgelenkverbindung befestigt, wobei die erste und zweite Verbindungsstange 26, 28 zusammen an einem Gleitelement 32 der ersten Linearführung 30 über eine Drehgelenkverbindung befestigt sind und wobei die dritte und vierte Verbindungsstange 27, 29 zusammen an einem Gleitelement 32 der zweiten Linearführung 31 über eine Drehgelenkverbindung befestigt sind.

Die Gelenkverbindung 16 weist hier ein Vertikaldrehgelenk 33 auf, wobei der erste Kragarm 14 und der zweite Kragarm 15 mit dem Vertikaldrehgelenk 33 verbunden sind. Das Vertikaldrehgelenk 33 weist eine Drehachse 34 auf, welche vertikal zur Längserstreckung bzw. vertikal zur Längsachse 24, 25 der Kragarme 14, 15 ausgebildet ist, so dass die Kragarme 14, 15 bei Kurvenfahrten des Routenzuges 100 um das Vertikaldrehgelenk 33, welches in Form einer Welle ausgebildet ist, bzw. um die Drehachse 34 des Vertikaldrehgelenks 33 verschwenkt werden können, wie in Fig. 5 angedeutet ist. Bei einer Kurvenfahrt werden die entsprechenden Verbindungsstangen 26, 27, 28, 29 in der Linearführung 30, 31 derart verschoben, dass mittels der Verbindungsstangen 26, 27, 28, 29 der entsprechende Kragarm 14, 15 hin zu der für die Kurvenfahrt notwendige Seite verschwenkt wird.

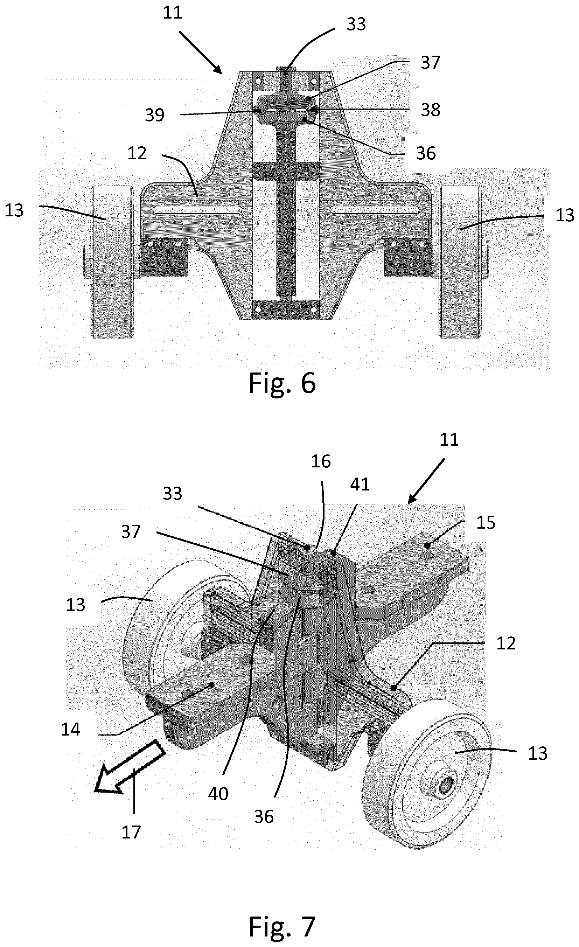

In Fig. 6 und 7 ist eine Ausführung einer Lenkvorrichtung gezeigt, bei welcher die Lenkvorrichtung in Form einer Getriebeeinheit ausgebildet ist.

Die Getriebeeinheit weist ein erstes Getrieberad 36, ein zweites Getrieberad 37, ein drittes Getrieberad 38 und ein viertes Getrieberad 39 auf, wobei alle Getrieberäder 36, 37, 38, 39 hier als Zahnräder, insbesondere als Kegelräder, ausgebildet sind. Das erste Getrieberad 36 ist über ein Verbindungselement 40 mit dem ersten Kragarm 14 verbunden, wobei das erste Getrieberad 36 ein Antriebsrad bildet. Das zweite Getrieberad 37 ist über ein Verbindungselement 41 mit dem zweiten Kragarm 15 verbunden, wobei das zweite Getrieberad 37 ein Abtriebsrad bildet. Das erste Getrieberad 36 und das zweite Getrieberad 37 sind parallel zueinander an dem Vertikaldrehgelenk 33 der Gelenkverbindung 16 angeordnet. Das dritte Getrieberad 38 und das vierte Getrieberad 39, welche gegenüberliegend zueinander angeordnet sind, sind jeweils mit der Radachse 12 bzw. dem Rahmen der Radachse 12 verbunden. Das dritte Getrieberad 38 und das vierte Getrieberad 39 sind jeweils zwischen dem ersten Getrieberad 36 und dem zweiten Getrieberad 37 angeordnet, so dass beispielsweise eine Drehbewegung des ersten Getrieberades 36 über das dritte und vierte Getrieberad 38, 39 an das zweite Getrieberad 37 übertragen werden kann. Dadurch, dass bei der hier gezeigten Ausgestaltung der Getriebeeinheit zwei Getrieberäder 38, 39, welche mit der Radachse 12 verbunden sind und zwischen dem ersten Getrieberad 36 und dem zweiten Getrieberad 37 angeordnet sind, vorgesehen sind, ist eine symmetrische Krafteinleitung bei einer Drehbewegung der Getrieberäder 36, 37, 38, 39 in die Radachse 12 bzw. den Rahmen der Radachse 12 möglich.

Die Getriebeeinheit bildet eine Art "Minusgetriebe" aus, welches eine Getriebestufe aufweist. Mittels der ineinander greifenden Getrieberäder 36, 37, 38, 39 kann eine Drehbewegung des ersten Kragarmes 14 beispielsweise im Uhrzeigersinn in eine Drehbewegung des zweiten Kragarmes 15 gegen den Uhrzeigersinn umgeformt werden und umgekehrt. Die 1:1-Übersetzung der Getriebeeinheit, welche durch die gleichen Teilkreisdurchmesser des als Antriebsrad ausgebildeten ersten Getrieberades 36 und des als Abtriebsrad ausgebildeten zweiten Getrieberades 37 realisiert ist, ermöglicht es, die Radachse 12 in eine winkelhalbierende Stellung zwischen dem ersten Kragarm 13 und dem zweiten Kragarm 15 zu lenken, so dass der erste, vordere Lenkwinkel αᵥ dem zweiten, hinteren Lenkwinkel αₕ entspricht.

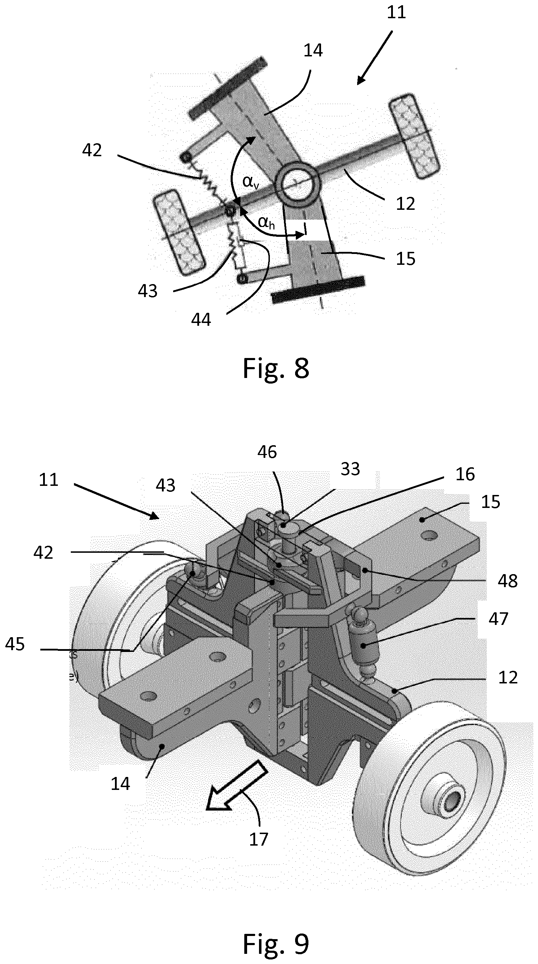

In Fig. 8 bis 10 sind Ausgestaltungen der Lenkvorrichtung als Feder-Dämpfer-System gezeigt.

Bei der in Fig. 8 gezeigten Ausgestaltung eines Feder-Dämpfer-Systems ist ein erstes Federelement 42 zwischen der Radachse 12 und dem ersten Kragarm 14 angeordnet. Ein zweites Federelement 43 ist zwischen der Radachse 12 und dem zweiten Kragarm 15 angeordnet. Sowohl das erste Federelement 42 als auch das zweite Federelement 43 sind hier als lineare Federn ausgebildet. Parallel zu dem zweiten Federelement 43 ist ferner ein Dämpferelement 44 zwischen der Radachse 12 und dem zweiten Kragarm 15 angeordnet. Durch das Dämpferelement 44 wird bei einer Kurvenfahrt des Routenzuges 100 der zweite Kragarm 15 langsamer gegenüber der Radachse 12 verdreht als der erste Kragarm 14. Der erste, vordere Lenkwinkel αᵥ verändert sich damit bei einer Kurvenfahrt schneller als der zweite, hintere Lenkwinkel αₕ, wobei jedoch auch das Feder-Dämpfer-System derart arbeitet, dass auch bei einer zeitweise unterschiedlichen Größe des ersten, vorderen Lenkwinkels αᵥ zu dem zweiten, hinteren Lenkwinkel αₕ die Lenkvorrichtung bestrebt ist, die Radachse 12 in eine winkelhalbierende Stellung zwischen dem ersten Kragarm 14 und dem zweiten Kragarm 15 zu lenken.

Bei einer Geradeausfahrt des Routenzuges 100, d. h. wenn der Knickwinkel y = 180° beträgt, befinden sich die Federelemente 42, 43 in einem Kräftegleichgewicht. Bei einer Kurvenfahrt des Routenzuges 100 wird hingegen eines der Federelemente 42, 43 gespannt und das andere Federelemente 42, 43 entspannt, so dass ein Kräfteungleichgewicht entsteht, wobei die Federelemente 42, 43 jedoch bestrebt sind, dieses Kräfteungleichgewicht möglichst schnell wieder auszugleichen, indem die Radachse 12 wieder in eine winkelhalbierende Stellung zwischen dem ersten Kragarm 14 und dem zweiten Kragarm 15 gelenkt wird.

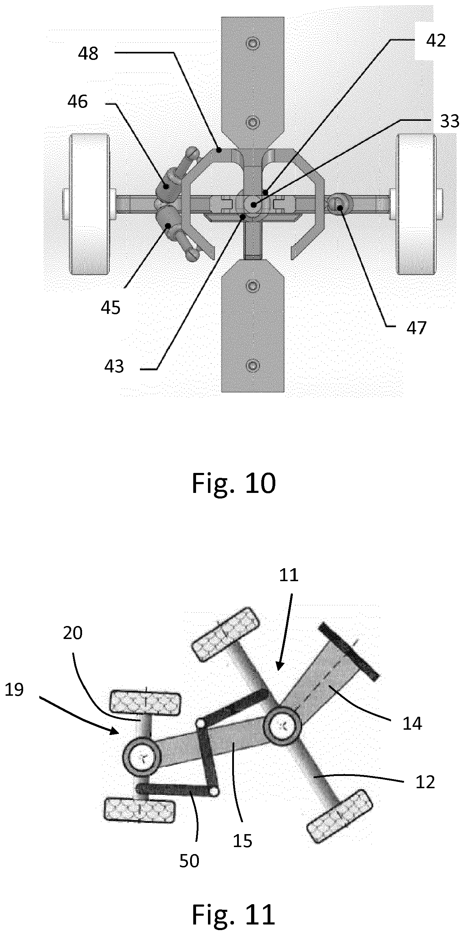

In Fig. 9 und 10 ist eine Ausgestaltung einer Lenkvorrichtung als Feder-Dämpfer-System gezeigt, bei welcher ebenfalls ein erstes Federelement 42 mit der Radachse 12 und dem ersten Kragarm 14 verbunden ist und ein zweites Federelement 43 mit der Radachse 12 und dem zweiten Kragarm 15 verbunden ist. Die beiden Federelemente 42, 43 sind hier als Drehfedern bzw. Torsionsfedern ausgebildet, welche an dem Vertikaldrehgelenk 33 der Gelenkverbindung 16 angeordnet sind. Ferner weist das in Fig. 9 und 10 gezeigte Feder-Dämpfer-System drei Dämpferelemente 45, 46, 47 auf, welche jeweils mit einem ersten Ende an der Radachse 12 und mit einem zweiten Ende an einem mit dem zweiten Kragarm 15 verbundenen Befestigungsrahmen 48 verbunden sind. Der Befestigungsrahmen 48 ist im Wesentlichen in einer Draufsicht von oben U-förmig ausgebildet. Ein erstes Dämpferelement 45 und ein zweites Dämpferelement 46 sind in einem Winkel < 90° zur Längserstreckung der Radachse 12 geneigt angeordnet und mit einer ersten, in Fahrtrichtung 17 gesehenen linken Seite der Radachse 12 verbunden. Ein drittes Dämpferelement 47 ist in einem Winkel von ca. 90° und damit vertikal zur Längserstreckung der Radachse 12 angeordnet und mit einer der ersten Seite gegenüberliegenden zweiten, in Fahrtrichtung gesehenen rechten Seite der Radachse 12 verbunden.

Die beiden axial zueinander und zum Vertikaldrehgelenk 33 angeordneten Federelemente 42, 43 ermöglichen, dass die Radachse 12 in eine winkelhalbierende Stellung zwischen dem ersten Kragarm 14 und dem zweiten Kragarm 15 gelenkt wird. Das Erreichen der winkelhalbierenden Stellung soll jedoch bei Kurvenfahrten zeitverzögert erfolgen, um eine möglichst hohe Spurtreue zu erreichen. Beim Einfahren in die Kurve ist es daher vorteilhaft, wenn der zweite, hintere Lenkwinkel αₕ für eine definierte Zeit größer ist als der erste, vordere Lenkwinkel αᵥ. Beim Ausfahren aus der Kurve ist es vorteilhaft, wenn der zweite, hintere Lenkwinkel αₕ für eine definierte Zeit kleiner ist als der erste, vordere Lenkwinkel αᵥ. Diese Art der Verzögerung der Winkelteilung wird durch den Einsatz der linearen Dämpferelemente 45, 46, 47 realisiert. Die spezielle Anordnung und Position der Dämpferelemente 45, 46, 47, wie sie in Fig. 9 und 10 gezeigt ist, ermöglicht die Ausnutzung der Kinematik des Achsmoduls 11, um die Dämpferwirkung je nach Position der Radachse 12 "auszuschalten". Dadurch wird ein ideales Nachlaufverhalten bzw. ein hohe Spurtreue des Routenzuges 100 bei einer Großzahl an Fahrmanövern realisiert.

Bei Einfahrt in eine Kurve wird der erste Kragarm 14 ausgelenkt, wodurch das erste Federelement 42 gespannt wird. Eine dadurch zwischen dem ersten Federelement 42 und dem zweiten Federelement 43 resultierende Momentendifferenz zwingt die Radachse 12 zur Bewegung, wobei durch die Dämpferelemente 45, 46, 47 die Radachse 12 in ihrer Bewegung bzw. Drehbewegung verzögert wird. Erhöht sich die Größe des ersten, vorderen Lenkwinkels αᵥ nimmt die Wirkung der Dämpferelemente 45, 46, 47 aufgrund sich reduzierender Momentendifferenzen in den Federelementen 42, 43 und zusätzlicher Wirkung der Kinematik ab, bis wieder eine winkelhalbierende Stellung der Radachse 12 erreicht wird, bei welcher der erste, vordere Lenkwinkel αᵥ gleich dem zweiten, hinteren Lenkwinkel αₕ ist.

In Fig. 11 ist noch einmal eine Detaildarstellung einer Anbindung eines Radgestells 19 an das letzte Achsmodul 11 des Routenzuges 100 gezeigt. Das Radgestell 19, insbesondere die Radachse 20 des Radgestells 19, ist ebenso wie die Radachse 12 des letzten Achsmoduls 11 gegenüber dem zweiten Kragarm 15 um eine Drehachse vertikal zur Längserstreckung des zweiten Kragarmes 15 verdrehbar. Zwischen der Radachse 12 des letzten Achsmoduls 11 und dem Radgestell 19 bzw. der Radachse 20 des Radgestells 19 ist eine Lenkkinematik, hier in Form eines Lenkgestelles 50, derart ausgebildet, dass das Radgestell 19 mit einem gleichgroßen aber entgegengesetzt gerichteten Winkel gegenüber dem Kragarm 15 verdreht wird wie die Radachse 12 des letzten Achsmoduls 11.

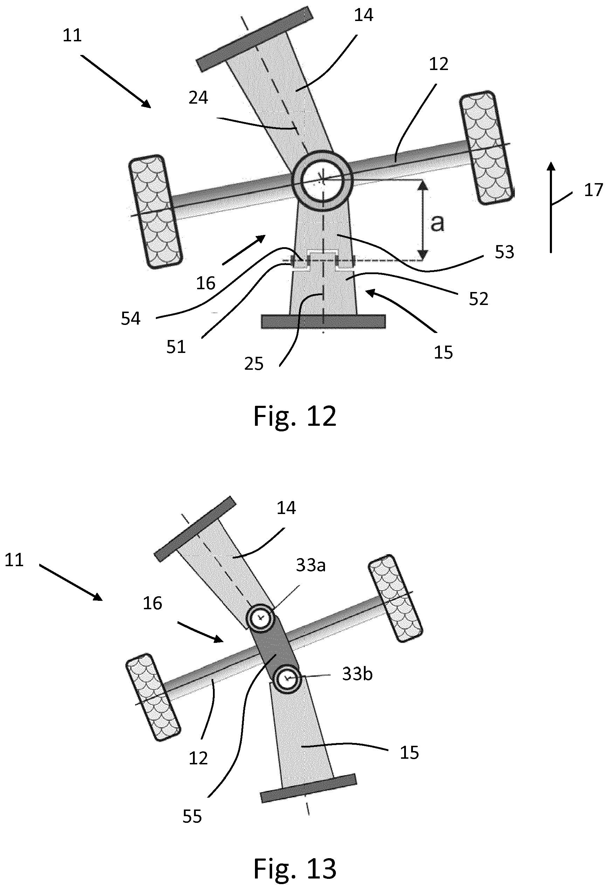

Bei dem in Fig. 12 gezeigten Achsmodul 11 weist die Gelenkverbindung 16 zusätzlich ein Horizontaldrehgelenk 51 auf, welches hier in dem zweiten Kragarm 15 selber angeordnet ist, so dass der zweite Kragarm 15 in zwei zueinander bewegliche Teilelemente 52, 53 unterteilt ist. Das Horizontaldrehgelenk 51 ist hier in Form einer Welle ausgebildet, welche quer zur Längserstreckung bzw. Längsachse 25 des zweiten Kragarmes 15 angeordnet ist. Das Horizontaldrehgelenk 51 weist somit eine Drehachse 54 auf, welche sich zumindest bei einer Geradeausfahrt des Routenzuges 100 quer zur Fahrtrichtung 17 des Routenzuges 100 erstreckt bzw. welche sich quer zur Längsachse 24, 25 des jeweiligen Kragarmes 14, 15, an welchem das Horizontaldrehgelenk 51 angeordnet ist, erstreckt.

Vorzugsweise ist der Abstand a zwischen dem Horizontaldrehgelenk 51 und der Radachse 12 möglichst klein ausgebildet. Bei der in Fig. 12 gezeigten Ausgestaltung ist der Abstand a > 0. Besonders bevorzugt ist es, wenn der Abstand a = 0 ist, wobei dann das Horizontaldrehgelenk 51 zwischen dem jeweiligen Kragarm 14, 15 und der Radachse 12 vorzugsweise in Form eines Kardangelenks ausgebildet wäre.

Fig. 13 zeigt eine weitere Ausgestaltung eines Achsmoduls 11, bei welchem die Gelenkverbindung 16 nicht nur ein Vertikaldrehgelenk, sondern ein erstes Vertikaldrehgelenk 33a und ein zweites Vertikaldrehgelenk 33b aufweist. Der erste Kragarm 14 ist über das erste Vertikaldrehgelenk 33a mittelbar mit der Radachse 12 verbunden und der zweite Kragarm 15 ist über das zweite Vertikaldrehgelenk 33b mittelbar mit der Radachse 12 verbunden, wobei das erste Vertikaldrehgelenk 33a und das zweite Vertikaldrehgelenk 33b auf einer gemeinsamen Platte 55 angeordnet sind, welche wiederum fest mit der Radachse 12 verbunden ist.

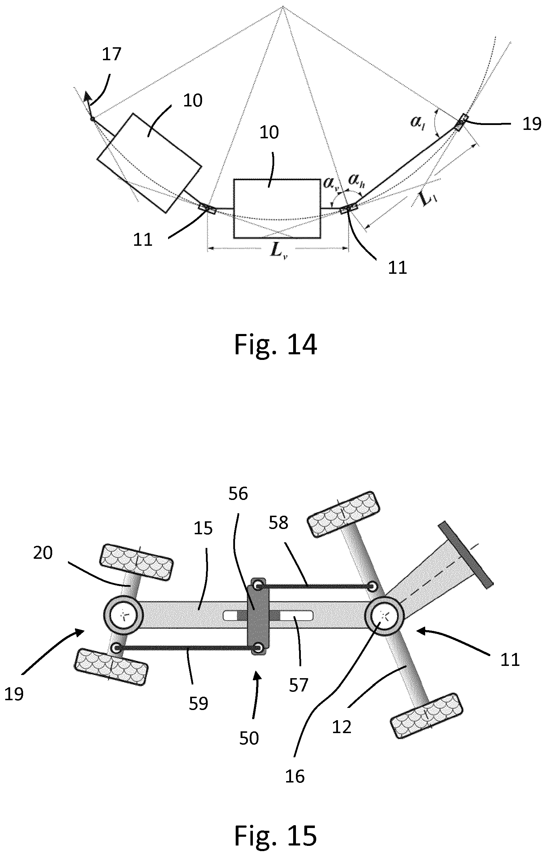

In Fig. 15, 17 und 19 sind weitere mögliche Ausgestaltungen einer Verbindung des in Fahrtrichtung 17 des Routenzugs 100 gesehenen letzten Achsmoduls 11 mit dem Radgestell 19 gezeigt.

Wie anhand der Fig. 14, 16 und 18 gezeigt ist, hängt die Wirkungsweise der Lenkkinematik für das Radgestell 19 von dem Längenverhältnis der Länge Lₗ, welche den Abstand zwischen der Gelenkverbindung 16 des letzten Achsmoduls 11 und dem Radgestell 19 und damit die Länge des zweiten Kragarms 15 des letzten Achsmoduls 11 darstellt, und der Länge Lᵥ, welche den Abstand zwischen dem letzten Achsmodul 11 und einem in Fahrtrichtung 17 vor dem letzten Achsmodul 11 angeordneten Achsmodul 11 darstellt.

Bei einem Längenverhältnis von Lₗ > 0,5 Lᵥ sollte das Radgestell 19 bzw. die Radachse 20 des Radgestells 19 entgegengesetzt gerichtet zu dem letzten Achsmodul 11 bzw. zur Radachse 12 des letzten Achsmoduls 11 gelenkt werden, um bei einer stationären Kreisfahrt des Routenzuges 100 eine Spurtreue des gesamten Routenzuges 100 sicherstellen zu können.

In Fig. 14 ist ein Grenzfall gezeigt, bei welchem ein Längenverhältnis von Lₗ = Lᵥ ausgebildet ist.

Fig. 15 zeigt eine mögliche Gegenlenkung des Radgestells 19 bei einem Längenverhältnis von Lₗ = Lᵥ, wie es in Fig. 14 gezeigt ist. Dafür ist zwischen dem letzten Achsmodul 11 und dem Radgestell 19 ein Lenkgestell 50 angeordnet. Die Radachse 20 des Radgestells 19 ist relativ zu dem zweiten Kragarm 15 des letzten Achsmoduls 11 verdrehbar, so dass der Lenkwinkel αₗ, des Radgestells 19 veränderbar ist. Der Lenkwinkel αₗ, des Radgestells 19 ist zwischen dem zweiten Kragarm 15 und der Radachse 20 des Radgestells 19 aufgespannt.

Das Lenkgestell 50 weist ein Führungselement 56 auf, welches entlang der Längserstreckung des zweiten Kragarms 15 des letzten Achsmoduls 11 verschiebbar geführt ist. Der zweite Kragarm 15 weist eine Ausnehmung 57 in Form eines Langlochs auf, dass sich in Längsrichtung des zweiten Kragarms 15 erstreckt, wobei das Führungselement 56 in der Ausnehmung 57 verschiebebeweglich gelagert ist. Das Führungselement 56 ist hier in Form einer Platte ausgebildet. Das Führungselement 56 ist über eine erste Verbindungsstange 58 mit der Radachse 12 des letzten Achsmoduls 11 verbunden. Über eine zweite Verbindungsstange 59 ist das Führungselement 56 mit der Radachse 20 des Radgestells 19 verbunden. Die zweite Verbindungsstange 59 ist an einem Endabschnitt des Führungselements 56 gelagert, welches gegenüberliegend zu einem Endabschnitt des Führungselements 56, an welchem die erste Verbindungsstange 58 an dem Führungselement 56 gelagert ist, ausgebildet ist.

Mit dem Lenkgestell 50 ist es möglich zu erreichen, dass der Lenkwinkel αₗ des Radgestells 19 gleich groß ist zu dem hinteren Lenkwinkel αₕ, welcher zwischen der Radachse 12 des letzten Achsmoduls 11 und dem zweiten Kragarm 15 aufgespannt ist Dadurch, dass mit dem Lenkgestell 50 ein Verhältnis der Lenkwinkel von αₗ = αₕ eingestellt werden kann, kann bei einer stationären Kreisfahrt des Routenzuges 100 eine Spurtreue des gesamten Routenzuges gewährleistet werden.

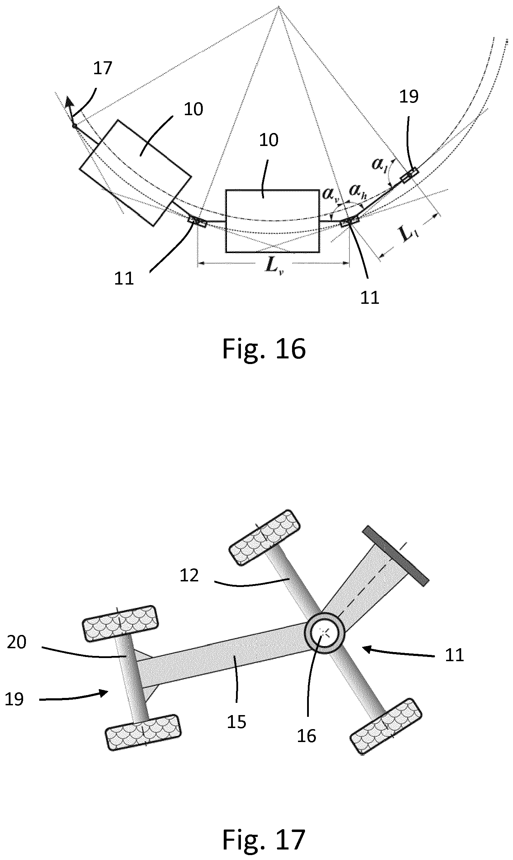

Fig. 16 zeigt eine weitere Ausgestaltung, bei welcher ein Längenverhältnis von Lₗ = 0,5 Lᵥ ausgebildet ist. Bei diesem Längenverhältnis sollte die Radachse 20 des Radgestells 19 konstant senkrecht zu dem zweiten Kragarm 15 des letzten Achsmoduls 11 ausgerichtet sein, so dass ein Lenkwinkel αₗ, von 90° ausgebildet ist. Wie in Fig. 17 dargestellt ist, kann dafür das Radgestell 19 bzw. die Radachse 20 des Radgestells 19 fest bzw. starr mit dem zweiten Kragarm 15 verbunden sein. Bei einem Längenverhältnis von Lₗ = 0,5 Lᵥ kann hierdurch ebenfalls ein Verhältnis der Lenkwinkel von αₗ, = αₕ eingestellt werden, so dass auch hier bei einer stationären Kreisfahrt des Routenzuges 100 eine Spurtreue des gesamten Routenzuges gewährleistet werden kann.

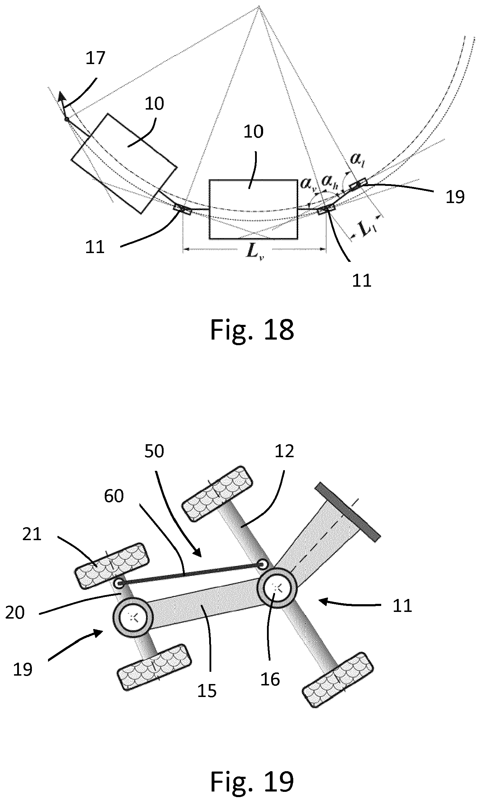

Fig. 18 zeigt eine weitere Ausgestaltung, bei welcher ein Längenverhältnis von Lₗ < 0,5 Lᵥ ausgebildet ist. Bei einem derartigen Längenverhältnis sollte die Radachse 20 des Radgestells 19 gleich gerichtet zu der Radachse 12 des in Fahrtrichtung 17 des Routenzugs 100 gesehenen letzten Achsmoduls 11 gelenkt werden, wie in Fig. 19 gezeigt ist, um bei einer stationären Kreisfahrt des Routenzuges 100 eine Spurtreue des gesamten Routenzuges. Um dies zu erreichen, ist vorzugsweise zwischen der Radachse 12 des letzten Achsmoduls 11 und der Radachse 20 des Radgestells 19 eine ein Lenkgestell 50 ausbildende Verbindungsstange 60 angeordnet, welche an der Radachse 12 des letzten Achsmoduls 11 und der Radachse 20 des Radgestells 19 gelenkig gelagert ist. Das Lenkgestell 50 ist somit bei dieser Ausgestaltung nur durch eine Verbindungsstange 60 ausgebildet.

Der Abstand zwischen der Gelenkverbindung der Verbindungstange 60 und der Radachse 12 des letzten Achsmoduls 11 und der Gelenkverbindung 16 ist größer als der Abstand zwischen der Gelenkverbindung der Verbindungstange 60 und der Radachse 20 des Radgestells 19. Hierdurch ist der Winkel zwischen der Radachse 12 und dem zweiten Kragarm 15 stets größer als der Winkel zwischen dem Kragarm 15 und der Radachse 20 des Radgestells 19, so dass auch hier bei einer stationären Kreisfahrt des Routenzuges 100 eine Spurtreue gesamten Routenzuges und insbesondere des letzten Achsmoduls 11 und des Radgestells 19 gewährleistet werden kann.

Die Verbindungsstange 60 ist entlang einer Seite des zweiten Kragarms 15 geführt, so dass die Verbindungsstange 60 den zweiten Kragarm 15 nicht überquert bzw. überlappt oder kreuzt.

Die Erfindung beschränkt sich in ihrer Ausführung nicht auf die vorstehend angegebenen bevorzugten Ausführungsbeispiele. Vielmehr ist eine Anzahl von Varianten denkbar, welche von den dargestellten Lösungen auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritte, können sowohl für sich als auch in den verschiedensten Kombinationen erfindungswesentlich sein.

### Bezugszeichenliste

- 100: Routenzug
- 10: Transportmodul
- 11: Achsmodul
- 12: Radachse
- 13: Rad
- 14: Erster Kragarm
- 15: Zweiter Kragarm
- 16: Gelenkverbindung
- 17: Fahrtrichtung
- 18: Schleppfahrzeug
- 19: Radgestell
- 20: Radachse
- 21: Rad
- 22: Verbindungselement
- 23: Verbindungselement
- 24: Längsachse
- 25: Längsachse
- 26: Erste Verbindungsstange
- 27: Ditte Verbindungsstange
- 28: Zweite Verbindungsstange
- 29: Vierte Verbindungsstange
- 30: Linearführung
- 31: Linearführung
- 32: Gleitelement
- 33: Vertikaldrehgelenk
- 33a: Vertikaldrehgelenk
- 33b: Vertikaldrehgelenk
- 34: Drehachse
- 35: Ausnehmung
- 36: Erstes Getrieberad
- 37: Zweites Getrieberad
- 38: Drittes Getrieberad
- 39: Viertes Getrieberad
- 40: Verbindungselement
- 41: Verbindungselement
- 42: Erstes Federelement
- 43: Zweites Federelement
- 44: Dämpferelement
- 45: Dämpferelement
- 46: Dämpferelement
- 47: Dämpferelement
- 48: Befestigungsrahmen
- 49: Winkelprofil
- 50: Lenkgestell
- 51: Horizontaldrehgelenk
- 52: Teilelement
- 53: Teilelement
- 54: Drehachse
- 55: Platte
- 56: Führungselement
- 57: Ausnehmung
- 58: Verbindungsstange
- 59: Verbindungsstange
- 60: Verbindungsstange
- 61: Tragarm
- 62: Tragarm
- 63: Kopplungselement
- 64: Kopplungselement
- 65: Steckachse

## Patentansprüche

1. Gleisloser Routenzug (100), mit
mindestens einem Transportmodul (10) und
mindestens zwei Achsmodulen (11),
wobei jedes Transportmodul (10) zwischen zwei Achsmodulen (11) angeordnet ist,
wobei jedes Achsmodul (11) eine Radachse (12) und eine Lenkvorrichtung zum Lenken der Radachse (12) aufweist,
**dadurch gekennzeichnet,**
**dass** jede Lenkvorrichtung eines Achsmoduls (11) jeweils derart ausgebildet ist, dass die Lenkvorrichtung das ihm zugeordnete Achsmodul (11) unabhängig von einer Lenkvorrichtung eines anderen Achsmoduls (11) lenkt.

2. Gleisloser Routenzug (100) nach Anspruch 1, **dadurch gekennzeichnet, dass** die Achsmodule (11) jeweils einen ersten Kragarm (14) und einen zweiten Kragarm (15) aufweisen, wobei der erste Kragarm (14) und der zweite Kragarm (15) über eine Gelenkverbindung (16) mit der Radachse (12) verbunden sind.

3. Gleisloser Routenzug (100) nach Anspruch 2, **dadurch gekennzeichnet, dass** die Gelenkverbindung (16) mindestens ein Vertikaldrehgelenk (33, 33a, 33b) aufweist, wobei das Vertikaldrehgelenk (33, 33a, 33b) eine Drehachse (34) aufweist, welche vertikal zur Längserstreckung der Kragarme (14, 15) ausgebildet ist.

4. Gleisloser Routenzug (100) nach Anspruch 3, **dadurch gekennzeichnet, dass** die Gelenkverbindung (16) genau ein Vertikaldrehgelenk (33) aufweist, wobei der erste Kragarm (14) und der zweite Kragarm (15) mit dem einen Vertikaldrehgelenk (33) verbunden sind.

5. Gleisloser Routenzug (100) nach Anspruch 3, **dadurch gekennzeichnet, dass** die Gelenkverbindung (16) ein erstes Vertikaldrehgelenk (33a) und ein zweites Vertikaldrehgelenk (33b) aufweist, wobei der erste Kragarm (14) über das erste Vertikaldrehgelenk (33a) mit der Radachse (12) verbunden ist und wobei der zweite Kragarm (15) über das zweite Vertikaldrehgelenk (33b) mit der Radachse (12) verbunden ist.

6. Gleisloser Routenzug (100) nach einem der Ansprüche 2 bis 5, **dadurch gekennzeichnet, dass** die Gelenkverbindung (16) ein Horizontaldrehgelenk (51) aufweist, wobei das Horizontaldrehgelenk (51) eine Drehachse (54) aufweist, welche sich zumindest bei einer Geradeausfahrt des Routenzuges (100) quer zur Fahrtrichtung (17) des Routenzuges (100) erstreckt.

7. Gleisloser Routenzug (100) nach einem der Ansprüche 2 bis 6, **dadurch gekennzeichnet, dass** die Lenkvorrichtung derart ausgebildet ist, dass die Lenkvorrichtung die Radachse (12) in eine winkelhalbierende Stellung zwischen dem ersten Kragarm (14) und dem zweiten Kragarm (15) lenkt.

8. Gleisloser Routenzug (100) nach einem der Ansprüche 2 bis 7, **dadurch gekennzeichnet, dass** die Lenkvorrichtung mindestens zwei Verbindungsstangen (26, 28) aufweist, wobei eine erste Verbindungsstange (26) mit einem ersten Ende mit dem ersten Kragarm (14) und mit einem zweiten Ende mit der Radachse (12) verbunden ist und wobei eine zweite Verbindungsstange (28) mit einem ersten Ende mit dem zweiten Kragarm (15) und mit einem zweiten Ende mit der Radachse (12) verbunden ist, wobei die Verbindungsstangen (26, 28) jeweils mit ihrem ersten Ende oder ihrem zweiten Ende in einer Linearführung (30, 31) verschiebbar geführt sind .

9. Gleisloser Routenzug (100) nach einem der Ansprüche 1 bis 7, **dadurch gekennzeichnet, dass** die Lenkvorrichtung in Form einer Getriebeeinheit ausgebildet ist.

10. Gleisloser Routenzug (100) nach Anspruch 9, **dadurch gekennzeichnet, dass** die Getriebeeinheit ein erstes mit dem ersten Kragarm (14) verbundenes Getrieberad (36), ein zweites mit dem zweiten Kragarm (15) verbundenes Getrieberad (37) und mindestens ein drittes mit der Radachse (12) verbundenes Getrieberad (38) aufweist, wobei das erste Getrieberad (36) und das zweite Getrieberad (37) über das mindestens eine dritte Getrieberad (38) drehbeweglich verbunden sind.

11. Gleisloser Routenzug (100) nach einem der Ansprüche 1 bis 7, **dadurch gekennzeichnet, dass** die Lenkvorrichtung in Form eines Feder-Dämpfer-Systems ausgebildet ist.

12. Gleisloser Routenzug (100) nach Anspruch 11, **dadurch gekennzeichnet, dass** das Feder-Dämpfer-System ein erstes mit dem ersten Kragarm (14) und der Radachse (12) verbundenes Federelement (42), ein zweites mit dem zweiten Kragarm (15) und der Radachse (12) verbundenes Federelement (43) und mindestens ein Dämpferelement (44, 45, 46, 47) aufweist.

13. Gleisloser Routenzug (100) nach Anspruch 12, **dadurch gekennzeichnet, dass** das mindestens eine Dämpferelement (44) mit der Radachse (12) und dem ersten Kragarm (14) oder dem zweiten Kragarm (15) verbunden ist.

14. Gleisloser Routenzug (100) nach Anspruch 12, **dadurch gekennzeichnet, dass** das Feder-Dämpfer-System drei Dämpferelemente (45, 46, 47) aufweist, welche jeweils mit einem ersten Ende an der Radachse (12) und mit einem zweiten Ende an einem mit der Gelenkverbindung (16) verbundenen Befestigungsrahmen (48) verbunden sind, wobei ein erstes Dämpferelement (45) und ein zweites Dämpferelement (46) in einem Winkel < 90° zur Längserstreckung der Radachse (12) geneigt angeordnet sind und mit einer ersten Seite der Radachse (12) verbunden sind und wobei ein drittes Dämpferelement (47) vertikal zur Längserstreckung der Radachse (12) angeordnet ist und mit einer der ersten Seite gegenüberliegenden zweiten Seite der Radachse (12) verbunden ist.

15. Gleisloser Routenzug (100) nach einem der Ansprüche 1 bis 7, **dadurch gekennzeichnet, dass** die Lenkvorrichtung einen motorischen Antrieb aufweist, welcher mittels einer elektronischen Steuereinheit gesteuert ist.

16. Gleisloser Routenzug (100) nach einem der Ansprüche 2 bis 14, **dadurch gekennzeichnet, dass** ein in Fahrtrichtung (17) des Routenzuges (100) gesehenes letztes Achsmodul (11) mit seinem ersten Kragarm (14) mit einem Transportmodul (10) und mit seinem zweiten Kragarm (15) mit einem mindestens ein Rad (21) aufweisenden Radgestell (19) verbunden ist.

17. Gleisloser Routenzug (100) nach Anspruch 16, **dadurch gekennzeichnet, dass** zwischen dem in Fahrtrichtung (17) des Routenzuges (100) gesehenen letzten Achsmoduls (11) und dem Radgestell (19) ein Lenkgestell (50) angeordnet ist.

18. Gleisloser Routenzug (100) nach Anspruch 17, **dadurch gekennzeichnet, dass** das Lenkgestell (50) eine Verbindungsstange (60) aufweist, welche mit einem ersten Ende mit der Radachse (12) des in Fahrtrichtung (17) gesehenen letzten Achsmoduls (11) und mit einem dem ersten Ende gegenüberliegenden zweiten Ende mit einer Radachse (20) des Radgestells (19) verbunden ist.

19. Gleisloser Routenzug (100) nach Anspruch 17, **dadurch gekennzeichnet, dass** das Lenkgestell (50) eine erste Verbindungsstange (58), eine zweite Verbindungsstange (59) und ein verschiebebeweglich an dem zweiten Kragarm (15) des in Fahrtrichtung (17) gesehenen letzten Achsmoduls (11) gelagertes Führungselement (56) aufweist, wobei die erste Verbindungsstange (58) mit dem Führungselement (56) und der Radachse (12) des in Fahrtrichtung (17) gesehenen letzten Achsmoduls (11) verbunden ist und wobei die zweite Verbindungsstange (59) mit dem Führungselement (56) und einer Radachse (20) des Radgestells (19) verbunden ist.

20. Gleisloser Routenzug (100) nach einem der Ansprüche 1 bis 19, **dadurch gekennzeichnet, dass** mindestens zwei Transportmodule (10) in Form von U-förmigen Tragrahmen vorgesehen sind, wobei die mindestens zwei Transportmodule (10) an ihren oberen Enden mindestens einen nach außen gerichteten Tragarm (61, 62) mit jeweils einem Kopplungselement (63, 64) aufweisen, wobei mittels der Kopplungselemente (63, 64) sich gegenüberliegend angeordnete Tragarme (61, 62) benachbart zueinander angeordneter Transportmodule (10) miteinander gelenkig gekoppelt sind.

21. Gleisloser Routenzug (100) nach Anspruch 20, **dadurch gekennzeichnet, dass** die Kopplungselemente (63, 64) sich gegenüberliegend angeordneter Tragarme (61, 62) mit einer an der Gelenkverbindung (16) angeordneten Steckachse (65) verbunden sind.

22. Verfahren zur Lenkung eines nach einem der Ansprüche 1 bis 20 ausgebildeten gleislosen Routenzuges (100), bei welchem ein Lenkwinkel der Lenkvorrichtung eines Achsmoduls (11) an eine Bahnkurve des gleislosen Routenzuges (100) angepasst wird.

23. Verfahren nach Anspruch 22, **dadurch gekennzeichnet, dass** bei einer Fahrbewegung des gleislosen Routenzuges (100) die Anpassung des Lenkwinkels kontinuierlich, in in einem geringen Zeitabstand aufeinanderfolgenden Intervallen erfolgt.

24. Verfahren nach Anspruch 22 oder 23, **dadurch gekennzeichnet, dass** zur Anpassung des Lenkwinkels ein Achsmittelpunkt des zu lenkenden Achsmoduls (11) und ein Achsmittelpunkt des in Fahrtrichtung (17) des gleislosen Routenzuges (100) gesehenen unmittelbar davor angeordneten Achsmoduls (11) bestimmt werden.

## Claims

1. Railless tugger train (100) having
at least one transportation module (10) and
at least two axle modules (11),
wherein each transportation module (10) is arranged between two axle modules (11),
wherein each axle module (11) has a wheel axle (12) and a steering device for steering the wheel axle (12),
**characterized in that** each steering device of an axle module (11) is embodied in each case in such a way that the steering device steers the axle module (11) which is assigned to it, independently of a steering device of another axle module (11).

2. Railless tugger train (100) according to claim 1, **characterized in that** the axle modules (11) each have a first cantilever arm (14) and a second cantilever arm (15), wherein the first cantilever arm (14) and the second cantilever arm (15) are connected to the wheel axle (12) via an articulated connection (16).

3. Railless tugger train (100) according to claim 2, **characterized in that** the articulated connection (16) has at least one vertical pivoting joint (33, 33a, 33b), wherein the vertical pivoting joint (33, 33a, 33b) has a rotational axis (34) which is embodied vertically with respect to the longitudinal extension of the cantilever arms (14, 15).

4. Railless tugger train (100) according to claim 3, **characterized in that** the articulated connection (16) has precisely one vertical pivoting joint (33), wherein the first cantilever arm (14) and the second cantilever arm (15) are connected to the one vertical pivoting joint (33).

5. Railless tugger train (100) according to claim 3, **characterized in that** the articulated connection (16) has a first vertical pivoting joint (33a) and a second vertical pivoting joint (33b), wherein the first cantilever arm (14) is connected to the wheel axle (12) via the first vertical pivoting joint (33a), and wherein the second cantilever arm (15) is connected to the wheel axle (12) via the second vertical pivoting joint (33b).

6. Railless tugger train (100) according to one of claims 2 to 5, **characterized in that** the articulated connection (16) has a horizontal pivoting joint (51), wherein the horizontal pivoting joint (51) has a rotational axis (54) which extends transversely with respect to the direction of travel (17) of the tugger train (100) at least in the case of straight-ahead travel of the tugger train (100).

7. Railless tugger train (100) according to one of claims 2 to 6, **characterized in that** the steering device is embodied in such a way that the steering device steers the wheel axle (12) into an angle-bisecting position between the first cantilever arm (14) and the second cantilever arm (15).

8. Railless tugger train (100) according to one of claims 2 to 7, **characterized in that** the steering device has at least two connecting rods (26, 28), wherein a first connecting rod (26) is connected by a first end to the first cantilever arm (14) and by a second end to the wheel axle (12), and wherein a second connecting rod (28) is connected by a first end to the second cantilever arm (15) and by a second end to the wheel axle (12), wherein the connecting rods (26, 28) are each guided in a displaceable fashion in a linear guide (30, 31) by their first end or their second end.

9. Railless tugger train (100) according to one of Claims 1 to 7, **characterized in that** the steering device is embodied in the form of a gear unit.

10. Railless tugger train (100) according to claim 9, **characterized in that** the gear unit has a first gear wheel (36) connected to the first cantilever arm (14), a second gear wheel (37) connected to the second cantilever arm (15), and at least a third gear wheel (38) connected to the wheel axle (12), wherein the first gear wheel (36) and the second gear wheel (37) are rotatably connected by the at least one third gear wheel (38).

11. Railless tugger train (100) according to one of claims 1 to 7, **characterized in that** the steering device is embodied in the form of a spring-damper system.

12. Railless tugger train (100) according to claim 11, **characterized in that** the spring-damper system has a first spring element (42) connected to the first cantilever arm (14) and to the wheel axle (12), a second spring element (43) connected to the second cantilever arm (15) and to the wheel axle (12), and at least one damper element (44, 45, 46, 47).

13. Railless tugger train (100) according to claim 12, **characterized in that** the at least one damper element (44) is connected to the wheel axle (12) and to the first cantilever arm (14) or to the second cantilever arm (15).

14. Railless tugger train (100) according to claim 12, **characterized in that** the spring-damper system has three damper elements (45, 46, 47) which are each connected by a first end to the wheel axle (12) and by a second end to an attachment frame (48) connected to the articulated connection (16), wherein a first damper element (45) and a second damper element (46) are arranged inclined at an angle < 90° with respect to the longitudinal extension of the wheel axle (12) and are connected to a first side of the wheel axle (12), and wherein a third damper element (47) is arranged vertically with respect to the longitudinal extension of the wheel axle (12) and is connected to a second side of the wheel axle (12) located opposite the first side.

15. Railless tugger train (100) according to one of claims 1 to 7, **characterized in that** the steering device has a motor-powered drive which is controlled by means of an electronic control unit.

16. Railless tugger train (100) according to one of claims 2 to 14, **characterized in that,** when viewed in the direction of travel (17) of the tugger train (100), a last axle module (11) is connected by its first cantilever arm (14) to a transportation module (10) and by its second cantilever arm (15) to a bogie frame (19) having at least one wheel (21).

17. Railless tugger train (100) according to claim 16, **characterized in that** a Bissell bogie (50) is arranged between the last axle module (11) when viewed in the direction of travel (17) of the tugger train (100) and the bogie frame (19).

18. Railless tugger train (100) according to claim 17, **characterized in that** the Bissell bogie (50) has a connecting rod (60) which is connected by a first end to the wheel axle (12) of the last axle module (11) when viewed in the direction of travel (17), and by a second end located opposite the first end to a wheel axle (20) of the bogie frame (19).

19. Railless tugger train (100) according to claim 17, **characterized in that** the Bissell bogie (50) has a first connecting rod (58), a second connecting rod (59) and a guide element (56) which is displaceably mounted on the second cantilever arm (15) of the last axle module (11) when viewed in the direction of travel (17), wherein the first connecting rod (58) is connected to the guide element (56) and to the wheel axle (12) of the last axle module (11) when viewed in the direction of travel (17), and wherein the second connecting rod (59) is connected to the guide element (56) and to a wheel axle (20) of the bogie frame (19).

20. Railless tugger train (100) according to one of claims 1 to 19, **characterized in that** at least two transportation modules (10) are provided in the form of U-shaped supporting frames, wherein the at least two transportation modules (10) at their upper ends have at least one outwardly directed supporting arm (61, 62) with a coupling element (63, 64) each, wherein supporting arms (61, 62), arranged opposite one another, of transportation modules (10) which are arranged adjacent to one another are coupled to one another in an articulated fashion by means of the coupling elements (63, 64).

21. Railless tugger train (100) according to claim 20, **characterized in that** the coupling elements (63, 64) of supporting arms (61, 62) which are arranged opposite one another are connected to a full-floating axle (65) arranged on the articulated connection (16).

22. Method for steering a railless tugger train (100) embodied according to one of claims 1 to 20, in which method a steering angle of the steering device of an axle module (11) is adapted to a trajectory of the railless tugger train (100).

23. Method according to claim 22, **characterized in that** in the case of a travel motion of the railless tugger train (100), the adaptation of the steering angle is carried out continuously, at intervals which follow one another within a short period of time.

24. Method according to claim 22 or 23, **characterized in that** in order to adapt the steering angle, an axle centre point of the axle module (11) to be steered and an axle centre point of the axle module (11) arranged directly in front thereof, when viewed in the direction of travel (17) of the railless tugger train (100) are determined.

## Revendications

1. Convoi tracté sans rail (100), avec
au moins un module de transport (10) et
au moins deux modules d'essieu (11),
chaque module de transport (10) étant disposé entre deux modules d'essieu (11),
chaque module d'essieu (11) comportant un axe de roue (12) et un dispositif de direction pour diriger l'axe de roue (12),
**caractérisé en ce que**
chaque dispositif de direction d'un module d'essieu (11) est respectivement constitué de telle sorte que le dispositif de direction dirige le module d'essieu (11) qui lui est affecté indépendamment d'un dispositif de direction d'un autre module d'essieu (11).

2. Convoi tracté sans rail (100) selon la revendication 1, **caractérisé en ce que** les modules d'essieu (11) comportent respectivement un premier bras en porte-à-faux (14) et un deuxième bras en porte-à-faux (15), le premier bras en porte-à-faux (14) et le deuxième bras en porte-à-faux (15) étant reliés par le biais d'une liaison articulée (16) à l'axe de roue (12).

3. Convoi tracté sans rail (100) selon la revendication 2, **caractérisé en ce que** la liaison articulée (16) comporte au moins une articulation tournante verticale (33, 33a, 33b), l'articulation tournante verticale (33, 33a, 33b) comportant un axe de rotation (34), lequel est constitué verticalement à l'extension longitudinale des bras en porte-à-faux (14, 15).

4. Convoi tracté sans rail (100) selon la revendication 3, **caractérisé en ce que** la liaison articulée (16) comporte exactement une articulation tournante verticale (33), le premier bras en porte-à-faux (14) et le deuxième bras en porte-à-faux (15) étant reliés avec cette une articulation tournante verticale (33).

5. Convoi tracté sans rail (100) selon la revendication 3, **caractérisé en ce que** la liaison articulée (16) comporte une première liaison articulée verticale (33a) et une deuxième articulation tournante verticale (33b), le premier bras en porte-à-faux (14) étant relié à l'axe de roue (12) par la première articulation tournante verticale (33a) et le deuxième bras en porte-à-faux (15) étant relié à l'axe de roue (12) par la deuxième articulation tournante verticale (33b).

6. Convoi tracté sans rail (100) selon l'une quelconque des revendications 2 à 5, **caractérisé en ce que** la liaison articulée (16) comporte une articulation tournante horizontale (51), l'articulation tournante horizontale (51) comportant un axe de rotation (54), lequel s'étend au moins pour une marche en ligne droite du convoi tracté (100) transversalement au sens de la marche (17) du convoi tracté (100).

7. Convoi tracté sans rail (100) selon l'une quelconque des revendications 2 à 6, **caractérisé en ce que** le dispositif de direction est constitué de telle sorte que le dispositif de direction dirige l'axe de roue (12) dans une position bissectrice entre le premier bras en porte-à-faux (14) et le deuxième bras en porte-à-faux (15).

8. Convoi tracté sans rail (100) selon l'une quelconque des revendications 2 à 7, **caractérisé en ce que** le dispositif de direction comporte au moins deux barres d'accouplement (26, 28), une première barre d'accouplement (26) étant reliée à une première extrémité au premier bras en porte-à-faux (14) et à une deuxième extrémité à l'axe de roue (12), une deuxième barre d'accouplement (28) étant reliée avec une première extrémité au deuxième bras en porte-à-faux (15) et à une deuxième extrémité à l'axe de roue (12), les barres d'accouplement (26, 28) étant respectivement guidées déplaçables dans un guidage linéaire (30, 31) avec leur première extrémité ou leur deuxième extrémité.

9. Convoi tracté sans rail (100) selon l'une quelconque des revendications 1 à 7, **caractérisé en ce que** le dispositif de direction est constitué sous la forme d'une unité de transmission.

10. Convoi tracté sans rail (100) selon la revendication 9, **caractérisé en ce que** l'unité de transmission comporte une première roue d'engrenage (36) reliée au premier bras en porte-à-faux (14), une deuxième roue d'engrenage (37) reliée au deuxième bras en porte-à-faux (15) et au moins une troisième roue d'engrenage (38) reliée à l'axe de roue (12), la première roue d'engrenage (36) et la deuxième roue d'engrange (37) étant reliées mobiles en rotation par l'au moins une troisième roue d'engrenage (38).

11. Convoi tracté sans rail (100) selon l'une quelconque des revendications 1 à 7, **caractérisé en ce que** le dispositif de direction est constitué sous la forme d'un système ressort-amortisseur.

12. Convoi tracté sans rail (100) selon la revendication 11, **caractérisé en ce que** le système ressort-amortisseur comporte un premier élément à ressort (42) relié au premier bras en porte-à-faux (14) et à l'axe de roue (12), un deuxième élément à ressort (43) relié au deuxième bras en porte-à-faux (15) et à l'axe de roue (12) et au moins un élément amortisseur (44, 45, 46, 47).

13. Convoi tracté sans rail (100) selon la revendication 12, **caractérisé en ce que** l'au moins un élément amortisseur (44) est relié à l'axe de roue (12) et au premier bras en porte-à-faux (14) ou au deuxième bras en porte-à-faux (15).

14. Convoi tracté sans rail (100) selon la revendication 12, **caractérisé en ce que** le système ressort-amortisseur comporte trois éléments amortisseurs (45, 46, 47), lesquels sont reliés respectivement à une première extrémité à l'axe de roue (12) et à une deuxième extrémité à un cadre de fixation (48) relié à la liaison articulée (16), un premier élément amortisseur (45) et un deuxième élément amortisseur (46) étant disposés inclinés dans un angle < 90° par rapport à l'extension longitudinale de l'axe de roue (12) et étant reliés à un premier côté de l'axe de roue (12) et un troisième élément amortisseur (47) étant disposé verticalement à l'extension longitudinale de l'axe de roue (12) et étant relié à un deuxième côté de l'axe de roue (12) opposé au premier côté.

15. Convoi tracté sans rail (100) selon l'une quelconque des revendications 1 à 7, **caractérisé en ce que** le dispositif de direction comporte un système d'entraînement motorisé, lequel est piloté au moyen d'une unité de commande électronique.

16. Convoi tracté sans rail (100) selon l'une quelconque des revendications 2 à 14, **caractérisé en ce qu'**un dernier module d'essieu (11) vu dans le sens de la marche (17) du convoi tracté (100) est relié avec son premier bras en porte-à-faux (14) à un module de transport (10) et avec son deuxième bras en porte-à-faux (15) à au moins un châssis de roues (19) comportant au moins une roue (21).

17. Convoi tracté sans rail (100) selon la revendication 16, **caractérisé en ce qu'**un châssis de direction (50) est disposé entre le dernier module d'essieu (11) vu dans le sens de la marche (17) du convoi tracté (100) et le châssis de roues (19).

18. Convoi tracté sans rail (100) selon la revendication 17, **caractérisé en ce que** le châssis de direction (50) comporte une barre d'accouplement (60), laquelle est reliée à une première extrémité à l'axe de roue (12) du dernier module d'essieu (11) vu dans le sens de la marche (17) et à une deuxième extrémité opposée à la première extrémité à un axe de roue (20) du châssis de roues (19).

19. Convoi tracté sans rail (100) selon la revendication 17, **caractérisé en ce que** le châssis de direction (50) comporte une première barre d'accouplement (58), une deuxième barre d'accouplement (59) et un élément de guidage (56) logé mobile en déplacement sur le deuxième bras en porte-à-faux (15) du dernier module d'essieu (11) vu dans le sens de la marche (17), la première barre d'accouplement (58) étant reliée à l'élément de guidage (56) et à l'axe de roue (12) du dernier module d'essieu (11) vu dans le sens de la marche (17) et la deuxième barre d'accouplement (59) étant reliée à l'élément de guidage (56) et à un axe de roue (20) du châssis de roues (19).

20. Convoi tracté sans rail (100) selon l'une quelconque des revendications 1 à 19, **caractérisé en ce qu'**au moins deux modules de transport (10) sont prévus sous la forme de châssis de support en forme de U, au moins deux modules de transport (10) comportant à leurs extrémités supérieures au moins un bras porteur (61, 62) orienté vers l'extérieur avec respectivement un élément d'accouplement (63, 64), des bras porteurs (61, 62) disposés opposés des modules de transport (10) disposés adjacents l'un à l'autre étant couplés entre eux de façon articulée au moyen des éléments d'accouplement (63, 64).

21. Convoi tracté sans rail (100) selon la revendication 20, **caractérisé en ce que** les éléments d'accouplement (63, 64) des bras porteurs (61, 62) disposés opposés sont reliés à un demi-arbre (65) disposé sur la liaison articulée (16).

22. Procédé pour la direction d'un convoi tracté sans rail (100) selon l'une quelconque des revendications 1 à 20, pour lequel un angle de direction du dispositif de direction d'un module d'essieu (11) est adapté à une courbe de trajectoire du convoi tracté sans rail (100).

23. Procédé selon la revendication 22, **caractérisé en ce que** pour un mouvement de conduite du convoi tracté sans rail (100), l'adaptation de l'angle de direction a lieu en continu à des intervalles successifs dans un faible intervalle de temps.

24. Procédé selon la revendication 22 ou 23, **caractérisé en ce que** pour adapter l'angle de direction, on détermine un point central d'essieu du module d'essieu à diriger (11) et un point central d'essieu du module d'essieu (11) disposé directement devant vu dans le sens de la marche (17) du convoi tracté sans rail (100).
